# EUROPÄISCHE PATENTSCHRIFT

(11) **EP 3 127 290 B1**
(45) Veröffentlichungstag und Bekanntmachung des Hinweises auf die Patenterteilung: **15.05.2019**
(21) Anmeldenummer: 15712264.9
(22) Anmeldetag: 09.03.2015
(51) Int. Cl.: H04L 25/03

(54) **VORRICHTUNG UND VERFAHREN ZUR ENTZERRUNG EINES EMPFANGENEN DATENSIGNALS**
DEVICE AND METHOD FOR EQUALIZING A RECEIVED DATA SIGNAL
DISPOSITIF ET PROCÉDÉ DE CORRECTION D'UN SIGNAL DE DONNÉES REÇU

(30) Priorität: 31.03.2014 DE 102014206092
(43) Veröffentlichungstag der Anmeldung: 08.02.2017
(73) Patentinhaber: Fraunhofer-Gesellschaft zur Förderung der angewandten Forschung e.V., 80686 München (DE)
(72) Erfinder: ZERNA, Conrad, 90429 Nürnberg (DE); WEBER, Norbert, 91367 Weißenohe (DE); NARAYANAN, Anand, S-584 34 Linköping (SE)
(74) Vertreter: Burger, Markus
(86) Internationale Anmeldenummer: PCT/EP2015/054828
(87) Internationale Veröffentlichungsnummer: WO 2015/150024

(56) Entgegenhaltungen:
- EP-A1- 1 255 389
- WO-A2-2010/039232
- US-A1- 2008 175 310
- LEE C H ET AL: "Comparison of receiver equalization using first-order and second-order Continuous-Time Linear Equalizer in 45 nm process technology", INTELLIGENT AND ADVANCED SYSTEMS (ICIAS), 2012 4TH INTERNATIONAL CONFERENCE ON, IEEE, 12 June 2012 (2012-06-12), pages 795-800, XP032238575, DOI: 10.1109/ICIAS.2012.6306122 ISBN: 978-1-4577-1968-4

## Beschreibung

Ausführungsbeispiele der vorliegenden Erfindung beziehen sich auf eine Vorrichtung zur Entzerrung eines empfangenen Datensignals. Weitere Ausführungsbeispiele der vorliegenden Erfindung beziehen sich auf ein Verfahren zur Entzerrung eines empfangenen Datensignals und auf ein Computerprogramm.

### Stand der Technik

Die Entzerrung eines an ein Medium (elektrisch, optisch) gebundenen Kanals (im Basisband, typischerweise ein Tiefpass) kann mit einem annähernd linearen zeitkontinuierlichen Filter (englische Abkürzung CTLE, continous-time linear equalizer) geschehen. Der Vorteil dieser Entzerrerstruktur liegt, im Vergleich zu komplexeren zeitdiskreten Topologien, darin, weniger Fläche zu benötigen und weniger Leistung aufzunehmen. Eine CTLE-Struktur kann in der gleichen Halbleitertechnologie gegenüber einer so genannten vorwärtsgekoppelten Entzerrung (feed forward equalization - FFE) oder einer Entscheidungs-Rückkopplungs-Entzerrung (decission feedback equalization - DFE) höhere Datenraten erreichen, weil keine bzw. kaum summierende Knoten enthalten sind.

Da in der Praxis Variationen der Kanalcharakteristik auftreten, z.B. durch verschiedene Längen des Mediums, mechanische Materialbeanspruchungen oder Temperaturunterschiede oder aufgrund von Prozessabweichungen bei der Halbleiterherstellung selbst, ist es notwendig, die Filterkennlinie an die jeweilige Situation anzupassen. Ziel dabei ist, das beste Ergebnis bezüglich des entzerrten Datensignals zu erreichen, d.h. niedrigste Bitfehlerraten bzw. eine größte Jittertoleranz. Eine derartige Anpassung des Filters sollte automatisch im Schaltkreis selbst geschehen, um benutzerfreundlich zu sein und auch Änderungen der Betriebsbedingungen (wie Versorgungsspannung, Temperatur oder Alterungseffekte) kompensieren zu können.

Alle (idealen) Entzerrungsfilter arbeiten nach dem Prinzip, Signalkomponenten in Frequenzbereichen mit unterschiedlicher Dämpfung im Kanal durch relativ angepasste Verstärkung über die Frequenz wieder auf ausgeglichene bzw. dem idealen Datensignal-Spektrum entsprechende Verhältnisse zu bringen. Mit anderen Worten: das Entzerrungsfilter besitzt eine Transferfunktion für den Frequenzbereich der Signalübertragung, die invers zur Transferfunktion des Kanals in diesem Bereich ist.

Diese ideale, theoretische Beschreibung eines Entzerrers hat in der Praxis zwei Einschränkungen. Während sich erstens die Inverse bezüglich des Amplitudengangs vergleichsweise gut annähern lässt, ist dies für den Phasengang deutlich schwieriger. Alle Filter mit einer Impulsantwort endlicher Länge (Finite Impulse Response - FIR-Strukturen) sind linear-phasig, d.h. sie weisen lediglich eine Verzögerung auf. Bei zeitkontinuierlichen Entzerrer-Strukturen ist die Phase immer mir dem Amplitudengang verknüpft und nicht beliebig kontrollierbar. Zweitens lässt sich eine "beliebige" Kanaltransferfunktion (d.h. keine synthetischen, gerade auf das spezielle Entzerrerfilter passenden Transferfunktionen) nur mit hohem Aufwand im Entzerrerfilter präzise ausgleichen. Das bedeutet, im FIR sind z.B. eine hohe Anzahl von Koeffizienten nötig und im CTLE werden komplexe Filterstrukturen (höherer Ordnung, z.B. gmC Filter) benötigt. In beiden Fällen ist diese Anforderung gerade bei hohen Datenraten schwer zu erfüllen, weil die Geschwindigkeitsgrenzen der Halbleitertechnologie erreicht werden. Zusammenfassend kann ein Entzerrerfilter bei hohen Datenraten nur annähernd die Inverse zum Kanal bilden, weil der Amplitudengang nicht präzise genug angepasst werden kann und der Phasengang des Entzerrerfilters an den Amplitudengang desselben geknüpft ist.

CTLE-Strukturen für höhere Bandbreiten werden typischerweise als Source-degenerierte Stufen bzw. Kaskaden von Stufen implementiert. Das Schaltungsnetzwerk der Source-Degeneration zur gezielten Reduktion der Verstärkung kann dabei aus Widerständen, Kapazitäten und Transistoren zusammengesetzt werden. Das Netzwerk an sich hat eine frequenzabhängige Impedanz, die mit steigender Frequenz abnimmt (Tiefpass). Das bedeutet, dass bei der Technik der Source-Degeneration durch Einfügen einer Impedanz zwischen Source eine Transistors und dem Referenzknoten die Verstärkung gezielt reduziert werden kann. Nimmt bspw. diese Impedanz zu hohen Frequenzen hin ab, nimmt auch die Verringerung der Verstärkung ab, so dass eine Hochpass-artige Charakteristik des Verstärkernetzwerks erhalten werden kann. Dies transformiert sich als höhere Verstärkung bei hohen Frequenzen in die Filterkennlinie des Entzerrfilters. Die Bandbreite dieser Impedanz ist einstellbar, um eine Kontrollmöglichkeit über die Filterkennlinie zu haben. Alternativ bzw. in Kombination können auch induktiv wirkende Netzwerke als Last verwendet werden, wobei der induktive Charakter meist einstellbar ist.

Bei mittleren bis hohen Bandbreiten kommen auch CTLE-Strukturen zum Einsatz, bei denen mehrere feste Filterkennlinien, z.B. ein Tiefpass und ein Bandpass, gewichtet addiert werden. Über den Gewichtungsfaktor erreicht man eine Kontrolle der Transferfunktion.

All diesen Strukturen ist gemein, dass sie eine einzige Größe für das Einstellen der Filterkennlinie besitzen, d.h. es gibt einen Freiheitsgrad. Der Begriff "Filterkennlinie" bezieht sich hier auf frequenzabhängige Änderungen der Verstärkung, wie sie durch eine Laplace Pol-Nullstellen-Beschreibung modelliert werden kann. Frequenzunabhängige Faktoren werden hierunter nicht gezählt.

Um die Einstellung des Entzerrers automatisch vornehmen zu können, muss ein Qualitätskriterium aus dem entzerrten Signal (Ausgangssignal des Entzerrers) extrahiert werden. Dafür sind mehrere Methoden bekannt. Z.B. wird die Flankensteilheit des Signals verwendet. Um einen Vergleichswert für die Flankensteilheit zu haben, wird das entzerrte Signal durch einen limitierenden Verstärker und eine Pufferstufe, die eine gute definierte Ausgangsflankensteilheit erzeugt, gesendet. Die zugrundeliegende Annahme ist, dass eine gute Entzerrer-Einstellung vorliegt, wenn das entzerrte Signal eine bestimmte Flankensteilheit erreicht hat.

Eine zweite bekannte Methode ist der Vergleich von mittleren Leistungen in mehreren Bereichen des Signalspektrums. Ein niederfrequenter Bereich, der nicht, bzw. kaum vom Kanal gedämpft wird, dient als Referenz für die vorhandene Leistung. Außerdem wird die mittlere Leistung in einem zweiten Frequenzbereich extrahiert, indem der Kanal dämpft bzw. der Entzerrer seinen Boostbereich (höhere Verstärkung als bei niedrigen Frequenzen) hat. Beide Frequenzbereiche können durch analoge Bandpässe selektiert werden. Die hier zugrundeliegende Annahme ist, dass der Entzerrer gut eingestellt ist, wenn beide mittleren Leistungen gleich sind.

Die Umsetzung des extrahierten Qualitätskriteriums in eine Einstellung für den Entzerrer kann analog, z.B. durch Integration der Differenz aus Referenzgröße und Regelgröße, oder digital durch entsprechende Logikfunktionen geschehen. Dabei bildet das Gesamtsystem immer eine negativ rückgekoppelte Regelschleife. Die entsprechenden Gesetzmäßigkeiten aus der Automatisierungstechnik zu Geschwindigkeit und/oder Stabilität der Regelschleife und Verstärkung und/oder Genauigkeit des Regelergebnisses kommen zum Tragen.

Es existieren Abwandlungen beider Methoden, die jedoch an der grundsätzlichen Funktionsweise festhalten. Hierzu zählen beispielsweise eine variable Einstellung der verglichenen Frequenzbereiche oder eine alternative Erzeugung der Referenz-Flankensteilheit.

Allen Verfahren gemein ist die Extraktion eines Qualitätskriteriums zur Einstellung des einen Freiheitsgrades des Entzerrers. Beispielsweise kann hier das Dokument US 2008/175310 A1 genannt werden.

Ebenfalls extrahieren alle Verfahren nur ein indirektes Qualitätskriterium: Flankensteilheit und mittlere Hochfrequenz-Leistung, um eigentlich die Bitfehlerrate der Datenübertragung zu optimieren.

Wünschenswert wäre demnach eine Vorrichtung zur Entzerrung eines empfangenen Datensignals, das eine verbesserte und/oder eine effizientere Entzerrung des empfangenen Datensignals ermöglicht.

Eine Aufgabe der vorliegenden Erfindung besteht darin, Vorrichtungen zur Entzerrung eines empfangenen Datensignals zu schaffen, die eine hohe Effizienz eines Kommunikationssystems, welches das Datensignal sendet bzw. empfängt, ermöglicht. Diese Aufgabe wird durch den Gegenstand der unabhängigen Patentansprüche gelöst.

Weitere vorteilhafte Ausführungsformen sind der Gegenstand der abhängigen Patentansprüche.

Der Kerngedanke der vorliegenden Erfindung besteht darin, erkannt zu haben, dass ein Augendiagramm eines empfangenen und/oder gefilterten Datensignals als direktes Qualitätskriterium für die Entzerrung des empfangenen Datensignals nutzbar ist und dass das Augendiagramm eine automatische Einstellung eines einstellbaren Filters zur Entzerrung des empfangenen Datensignals unter Verwendung eines direkten Qualitätskriteriums und eine Einstellung des Filters bezüglich eines oder mehrerer Einstellparameter ermöglicht.

Ausführungsbeispiele der vorliegenden Erfindung beziehen sich auf eine Vorrichtung zur Entzerrung (Entzerrer) eines empfangenen Datensignals mit einem einstellbaren Filter und einem Filtereinsteller. Das einstellbare Filter ist ausgebildet, um das empfangene Datensignal zu filtern und um ein gefiltertes Datensignal basierend auf dem empfangenen Datensignal zu liefern. Der Filtereinsteller ist ausgebildet, um das gefilterte Datensignal mit einer Augenmaske zu vergleichen, um eine Einstellung des einstellbaren Filters basierend auf einer der Augenmaske zugeordneten Anzahl von Maskenverletzungen, die das gefilterte Datensignal bezüglich der Augenmaske aufweist, zu bestimmen und um das einstellbare Filter basierend auf der bestimmten Einstellung einzustellen.

Vorteilhaft an diesem Ausführungsbeispiel ist, dass ein Vergleich des gefilterten Datensignals mit der Augenmaske einen direkten Hinweis darauf liefert, ob das gefilterte Datensignal Bitfehler aufweist, wenn das gefilterte Datensignal die Augenmaske verletzt. Der Vergleich kann in Echtzeit erfolgen, so dass eine Bestimmung einer Maskenverletzung bezügliche eines jeden Datensymbols des gefilterten und mithin in Hinblick auf eine Maskenfehler- oder Maskenverletzungsrate über eine Anzahl von Datensymbole hinweg präzise erfolgen kann. Die Augenmaske ermöglicht eine Nutzung eines direkten Qualitätskriterium bezüglich der Entzerrereinstellung, so dass eine Effektivität bzw. Effizienz des Entzerrers und somit des Kommunikationssystems erhöht ist.

Weitere Ausführungsbeispiele der vorliegenden Erfindung beziehen sich auf eine Vorrichtung, bei der das einstellbare Filter einen ersten Einstellparameter und einen zweiten Einstellparameter aufweist.

Vorteilhaft an diesen Ausführungsbeispielen ist, dass eine Einstellung des einstellbaren Filters mittels zweier Einstellparameter eine verbesserte Entzerrung des empfangenen Datensignals ermöglicht und so eine Bitfehlerrate weiter reduzierbar ist.

Weitere Ausführungsbeispiele der vorliegenden Erfindung beziehen sich auf eine Vorrichtung, bei der der erste Einstellparameter eine Hochfrequenz-Anhebung des einstellbaren Filters erlaubt und bei der der zweite Einstellparameter eine Einstellung eines Verlaufs eines Anstiegs einer Übertragungsfunktion des einstellbaren Filters von niedrigen Frequenzen hin zu hohen Frequenzen erlaubt.

Vorteilhaft an diesen Ausführungsbeispielen ist, dass zusätzlich zu einer Verstärkung bei hohen Frequenzen auch eine Verstärkung bzw. ein Verlauf einer Verstärkungscharakteristik in einem Übergangsbereich des Frequenzbandes und so eine verbesserte Entzerrung möglich ist.

Weitere Ausführungsbeispiele der vorliegenden Erfindung beziehen sich auf eine Vorrichtung, bei der der Filtereinsteller ausgebildet ist, um eine Größe der Augenmaske zu verringern, wenn eine der Augenmaske zugeordnete Anzahl von Maskenverletzungen des gefilterten Datensignals bezüglich der Augenmaske größer oder gleich einem Vergleichswert ist, und um die Einstellung des einstellbaren Filters unter Verwendung der Augenmaske mit der verringerten Größe zu bestimmen.

Vorteilhaft an diesen Ausführungsbeispielen ist, dass durch eine Verringerung der Maskengröße eine Anzahl von Maskenverletzungen, die das gefilterte Datensignal bezüglich der Augenmaske aufweist, hin zu einem Minimum oder einer vordefinierten Untergrenze minimiert werden kann, wenn die Minimierung hin zu dem Minimum oder hin zu der vordefinierten Untergrenze für eine Augenmaske mit einer höheren Größe schwer oder nicht möglich ist.

Weitere Ausführungsbeispiele der vorliegenden Erfindung beziehen sich auf Vorrichtungen, bei denen der Filtereinsteller ausgebildet ist, um die Größe der Augenmaske zu erhöhen, wenn die der Augenmaske zugeordnete Anzahl von Maskenverletzungen kleiner als oder gleich einer vorbestimmten Untergrenze ist, und um die Einstellung des einstellbaren Filters unter Verwendung der Augenmaske mit der erhöhten Größe zu bestimmen.

Vorteilhaft an diesen Ausführungsbeispielen ist, dass, wenn der Filtereinsteller Filtereinstellungen bestimmt hat, für die das einstellbare Filter die Anzahl der Maskenverletzungen des gefilterten Datensignals bezüglich der Augenmaske minimiert, überprüfbar ist, ob bei einer größeren Augenmaske mit einer höheren Fehleranfälligkeit eine weitere Optimierung der Filtereinstellung und mithin eine weitere Reduzierung der Bitfehlerwahrscheinlichkeit möglich ist.

Weitere Ausführungsbeispiele der vorliegenden Erfindung schaffen eine Vorrichtung, bei der die Augenmaske vier Referenzpunkte aufweist, die jeweils einen zeitlichen Versatz bezüglich eines Taktes des empfangenen bzw. gefilterten Datensignals und einen Amplitudenwert aufweisen, wobei eine Größe der Augenmaske auf einem zeitlichen Abstand und einem amplitudenmäßigen Abstand der Referenzpunkte basiert.

Vorteilhaft an diesem Ausführungsbeispiel ist, dass eine Verletzung der Augenmaske mittels Schwellwertentscheidungen, d.h. ob das gefilterte Datensignal zu Abtastzeitpunkten Amplitudenwerte aufweist, die gleich, kleiner oder größer sind als der jeweilige Amplitudenwert des Referenzpunktes ermöglicht wird, wobei der zeitliche Versatz bezüglich des Taktes des empfangenen Datensignals Zeitpunkte darstellen, zu denen das empfangene oder gefilterte Datensignal abgetastet wird.

Weitere Ausführungsbeispiele der vorliegenden Erfindung schaffen eine Vorrichtung, bei der der Filtereinsteller ausgebildet ist, um die Anzahl von Maskenverletzungen für eine Vielzahl von aufeinanderfolgenden Symbolen des empfangenen bzw. gefilterten Datensignals zu bestimmen, wobei der Filtereinsteller ausgebildet ist, um jedes der Vielzahl von Symbolen auf eine Maskenverletzung zu überprüfen.

Vorteilhaft an diesen Ausführungsbeispielen ist, dass mittels einer Überprüfung eines jeden der Vielzahl von Symbolen eine Echtzeitfähigkeit der Vorrichtung herstellbar ist, so dass eine Einstellung des einstellbaren Filters im laufenden Betrieb und ggf. in Echtzeit, das heißt für jedes zu überwachende Datensymbol des gefilterten Datensignals, erfolgen kann, bzw. Änderungen der Kanalcharakteristik in Echtzeit feststellbar sind.

Weitere Ausführungsbeispiele der vorliegenden Erfindung schaffen eine Vorrichtung, bei der der Filtereinsteller ausgebildet ist, um in Iterationsdurchläufen Einstellparameter des einstellbaren Filters schrittweise zu verändern und zu überprüfen, ob die Veränderung zu einer reduzierten Anzahl von Maskenverletzungen gegenüber einem vorherigen Iterationsdurchlauf führt. Der Filtereinsteller ist ferner ausgebildet, um zu entscheiden, ob ein weiterer Iterationsdurchlauf durchgeführt werden soll, ob die Anzahl von Maskenverletzungen hinreichend reduziert ist oder, ob keine weitere Reduzierung erreicht wurde.

Vorteilhaft an diesem Ausführungsbeispiel ist, dass die Einstellung des einstellbaren Filters iterativ bestimmbar ist und dies mittels iterativer Verfahren, wie etwa einem Gradienten-Verfahren, automatisch durchführ ist.

Weitere Ausführungsbeispiele der vorliegenden Erfindung schaffen eine Vorrichtung, bei der der Filtereinsteller ausgebildet ist, um ausgehend von einer ursprünglichen Filtereinstellung mit ursprünglichen Einstellparametern mittels Variation der Einstellparameter eine Mehrzahl von temporären Filtereinstellungen zu bestimmen, denen jeweils eine Anzahl von temporären Maskenverletzungen und temporäre Einstellparameter zugeordnet sind, wobei eine Mehrzahl von temporären Maskenverletzungen einen minimalen Wert aufweist, und wobei der Filtereinsteller ausgebildet ist, um den minimalen Wert zu bestimmen.

Vorteilhaft an diesem Ausführungsbeispiel ist, dass Einstellparameter ausgehend von einem aktuellen Wert, d.h. einer aktuellen Filtereinstellung, unterschiedlich variiert werden können, beispielsweise erhöht und erniedrigt. Der Filtereinsteller kann die verschiedenen Variationen vergleichen, um aus den möglichen nächsten Filtereinstellungen diejenige Einstellung auszuwählen, die die geringste Anzahl von Maskenverletzungen aufweist, so dass eine finale Filtereinstellung schnell und mit wenig Iterationsdurchläufen bestimmbar ist.

Weitere Ausführungsbeispiele der vorliegenden Erfindung schaffen eine Vorrichtung, bei der der Filtereinsteller ausgebildet ist, um Initialisierungswerte bereitzustellen. Die Initialisierungswerte beschreiben eine initiale Augenmaske mit einer initialen Größe, eine initiale Anzahl von Maskenverletzungen, die das gefilterte Datensignal bezüglich der initialen Augenmaske aufweist, und initiale Einstellparameter.

Vorteilhaft an diesem Ausführungsbeispiel ist, dass Initialisierungswerte so gewählt werden können, dass eine initiale Anzahl von Maskenfehlern kleiner oder gleich einer vordefinierten Initialobergrenze und größer oder gleich einer vordefinierten Initialuntergrenze sind. So können Filtergrundeinstellungen vermieden werden, die eine hohe Anzahl von Iterationsdurchläufen und eine lange Zeitdauer benötigen würden, bis die Einstellung des einstellbaren Filters bestimmt ist. Dies ist beispielsweise eine Filtereinstellung, die ein Minimum an Maskenverletzungen aufweist.

Weitere Ausführungsbeispiele der vorliegenden Erfindung schaffen eine Vorrichtung, bei der der Filtereinsteller ausgebildet ist, um, wenn das einstellbare Filter mit der bestimmten Einstellung eingestellt ist, die Anzahl der Maskenfehler des gefilterten Datensignals mit einem vordefinierten Schwellwert zu vergleichen, und um die Einstellung des einstellbaren Filters erneut zu bestimmen, wenn ein Maß der Anzahl der Maskenfehler gleich oder größer ist, als der vordefinierte Schwellwert.

Vorteilhaft an diesem Ausführungsbeispiel ist, dass eine Zustandsüberwachung (engl.: Condition Monitoring) des Übertragungskanals und/oder des Entzerrers ermöglicht wird, und das einstellbare Filter auf veränderte Betriebsbedingungen verändert eingestellt werden kann.

Weitere Ausführungsbeispiele der vorliegenden Erfindung beziehen sich auf ein Verfahren und ein Computerprogramm zur Entzerrung eines empfangenen Datensignals.

### Kurzbeschreibung der Figuren

Bevorzugte Ausführungsbeispiele der vorliegenden Erfindung werden nachfolgend Bezug nehmend auf die beiliegenden Zeichnungen erläutert. Es zeigen:
- Fig. 1: ein schematisches Blockschaltbild einer Vorrichtung zur Entzerrung eines empfangenen Datensignals gemäß einem Ausführungsbeispiel;
- Fig. 2: ein schematisches Blockschaltbild einer Vorrichtung zur Entzerrung des empfangenen Datensignals gemäß einem weiteren Ausführungsbeispiel, bei dem das einstellbare Filter zwei Einstellparameter aufweist;
- Fig. 3: ein schematisches Ablaufdiagramm eines Verfahrens zur Entzerrung eines empfangenen Datensignals gemäß einem Ausführungsbeispiel;
- Fig. 4: ein schematisches Ablaufdiagramm eines Verfahrens zur Entzerrung eines empfangenen Datensignals gemäß einem Ausführungsbeispiel, das eine Initialisierungsphase aufweist;
- Fig. 5: ein schematisches Ablaufdiagramm eines Verfahrens zur Entzerrung eines empfangenen Datensignals gemäß einem Ausführungsbeispiel, das eine Zustandsüberwachung aufweist;
- Fig. 6: eine schematische Darstellung einer Augenmaske, die bezüglich eines empfangenen Datensignals aufgespannt wird; und
- Fig. 7: einen schematischen Graph zur Verdeutlichung einer Parametervariation, bei dem an der Abszisse ein erster Einstellparameter und an der Ordinate ein zweiter Einstellparameter aufgezeichnet ist.

### Detaillierte Beschreibung von Ausführungsbeispielen der vorliegenden Erfindung

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgende Ausführungen beziehen sich auf eine Einstellung eines einstellbaren Filters. Die Einstellung kann mittels einer Variation zumindest eines Einstellparameters des einstellbaren Filters erfolgen. Der Einstellparameter kann bspw. ein Wert innerhalb einer Skala (etwa %) sein, wohingegen die Filtereinstellung selbst ein dem Skalenwert entsprechender Spannungs- oder Stromwert sein kann. Alternativ oder zusätzlich kann der Einstellparameter ein diskretes (etwa digitales) Hinzu- oder Wegschalten von Schaltungselementen wie etwa Widerständen, Kondensatoren, Spulen und/oder Transistoren in einer elektrischen Verbindung sein, bspw. zur Veränderung von Schaltungseigenschaften, etwa eine Veränderung einer der elektrischen Verbindung in einen hochohmigen oder einen niederohmigen Zustand. Der Einstellparameter kann somit einer Einstellung des einstellbaren Filters entsprechen. Der Einstellung ist in anderen Worten der zumindest eine Einstellparameter zugeordnet, weswegen die Begriffe Einstellung uns Einstellparameter in Bezug auf das einstellbare Filter als Synonyme verwendet werden.

Nachfolgend wird Bezug genommen auf einstellbare Filter und darunter insbesondere auf analoge einstellbare Filter. Als analoge Filter werden nachfolgend Filter verstanden, die ausgebildet sind, um an einem Filterausgang ein wertkontinuierliches und/oder zeitkontinuierliches gefiltertes Datensignal bereitzustellen. Das wertkontinuierliche und/oder zeitkontinuierliche gefilterte Datensignal kann einen Takt aufweisen.

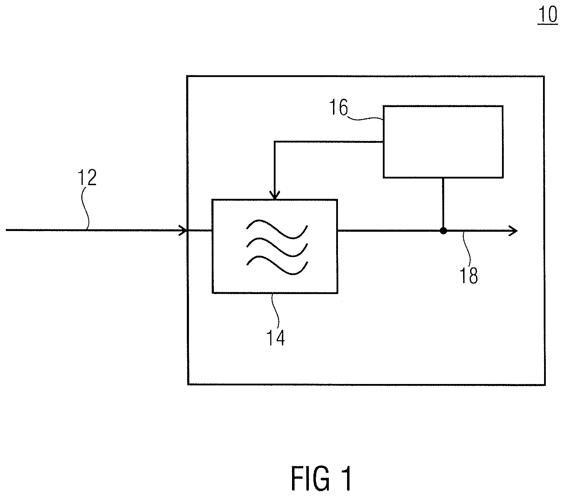

Fig. 1 zeigt ein schematisches Blockschaltbild einer Vorrichtung 10 zur Entzerrung eines empfangenen Datensignals 12 gemäß einem Ausführungsbeispiel. Die Vorrichtung 10 umfasst ein einstellbares Filter 14 und einen Filtereinsteller 16. Das einstellbare Filter 14 ist vorzugsweise ein analoges Filter. Die Vorrichtung 10 ist ausgebildet, um das Datensignal 12 zu empfangen und dem einstellbaren Filter 14 bereitzustellen. Das einstellbare Filter 14 ist ausgebildet, um das empfangene Datensignal 12 zu filtern und um ein gefiltertes Datensignal 18 basierend auf dem empfangenen Datensignal 12 zu liefern. Ein Takt des empfangenen Datensignals 12 und des gefilterten Datensignals 18 kann gleich sein. Eine Anzahl von Symbolen und Symbolübergängen zwischen Symbolen, die das empfangene Datensignal 12 aufweist kann gleich einer Anzahl von Symbolen und Symbolübergängen sein, die das gefilterte Datensignal 18 aufweist.

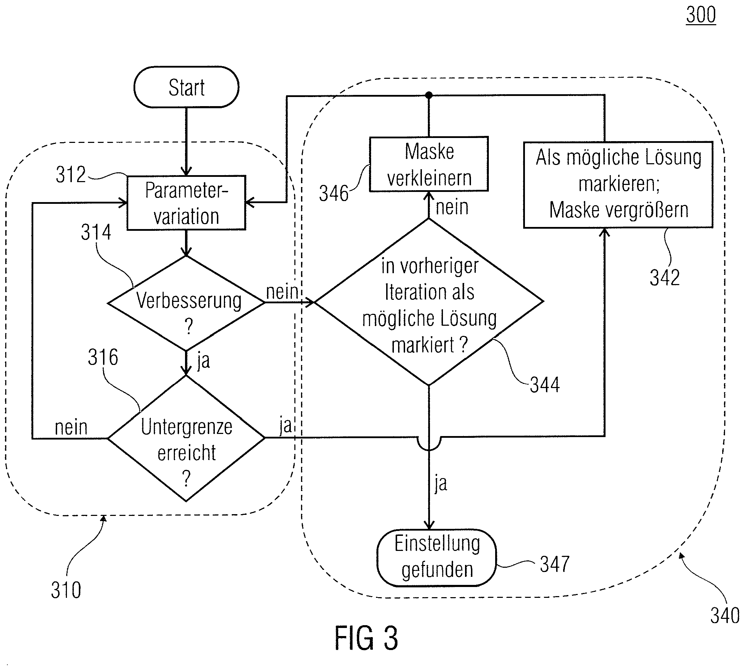

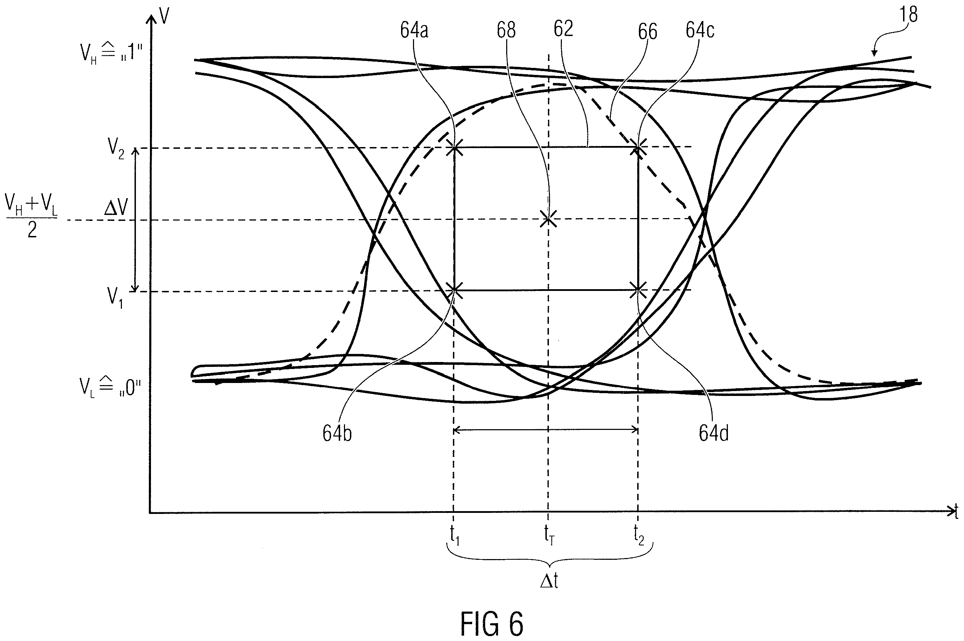

Der Filtereinsteller 16 ist ausgebildet, um das gefilterte Datensignal 18 mit einer Augenmaske zu vergleichen und um eine Anzahl von Maskenverletzungen, die das gefilterte Datensignal 18 bezüglich der Augenmaske aufweist, zu bestimmen. Das heißt, der Einstellungen des einstellbaren Filters 14 ist bezüglich der Augenmaske eine Anzahl von Maskenverletzungen zugeordnet. Der Filtereinsteller 16 ist ferner ausgebildet, um eine Einstellung des einstellbaren Filters 14 basierend auf der der Augenmaske zugeordneten Anzahl von Maskenverletzungen zu bestimmen und um das einstellbare Filter 14 basierend auf der bestimmten Einstellung einzustellen. Details bezüglich des Vergleichs des gefilterten Datensignals 18 mit einer Augenmaske werden nachfolgend in Fig. 6 beschrieben. Verfahren zur Bestimmung der Einstellung gemäß Ausführungsbeispielen werden nachfolgend in den Fig. 3-5 beschrieben.

Der Filtereinsteller 16 ist ausgebildet, um die Anzahl von Maskenverletzungen für eine Vielzahl von aufeinanderfolgenden Symbolen des empfangenen und mithin gefilterten Datensignals 18 zu bestimmen, wobei der Filtereinsteller ausgebildet ist, um jedes der Vielzahl von Symbolen auf eine Maskenverletzung zu überprüfen, das bedeutet, ggf. eine Vielzahl von aufeinanderfolgenden Symbolen des gefilterten Datensignals zu erfassen und jedes davon auswerten. Die Vielzahl von Symbolen kann dabei eine Anzahl von mehr als 10, mehr als 100 oder mehr als 1000 Symbolen des empfangenen Datensignals sein. Das bedeutet, dass der Filtereinsteller 16 ausgebildet ist, um die Anzahl der Maskenverletzungen in Echtzeit zu bestimmen, wobei echtzeitfähig bedeutet, dass jede Verletzung der Maske detektiert wird. Alternativ kann die Vielzahl von Symbolen auch einen Dauerbetrieb derart charakterisieren, dass jedes einzelne Symbol des gefilterten Datensignals 18 während des Dauerbetriebs bezüglich einer Maskenverletzung überprüft wird.

Die Vorrichtung 10 ist beispielsweise ein Entzerrer. Der Filtereinsteller 16 kann das einstellbare Filter 14 bezüglich eines oder bezüglich zweier Freiheitsgrade mittels eines bzw. mittels zweier Einstellparameter einstellen.

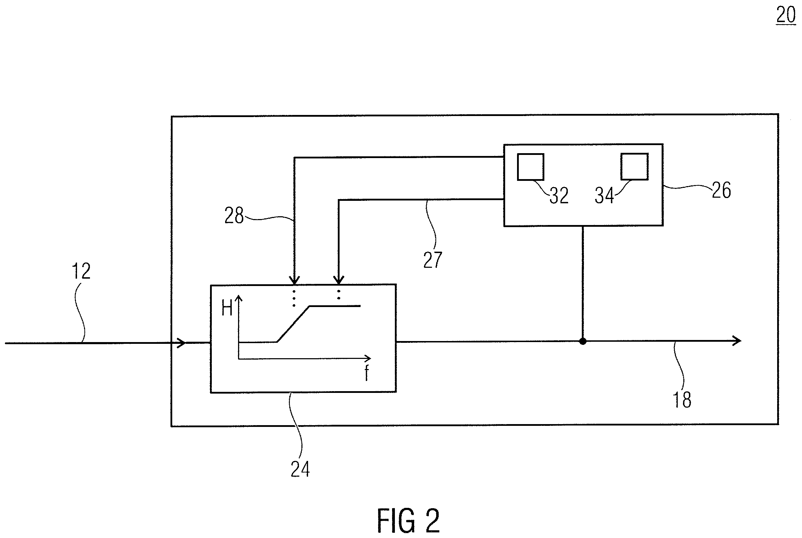

Fig. 2 zeigt ein schematisches Blockschaltbild einer Vorrichtung 20 zur Entzerrung des empfangenen Datensignals 12 gemäß einem weiteren Ausführungsbeispiel. Die Vorrichtung 20 weist ein einstellbares Filter 24 auf, das bezüglich zweier Freiheitsgrade einstellbar ist. Das bedeutet, dass das einstellbare Filter 24 zwei Einstellparameter aufweist. Das einstellbare Filter 24 ist vorzugsweise ein analoges Filter. Ein erster Einstellparameter 27 erlaubt eine Hochfrequenz-Anhebung des einstellbaren Filters 24. Ein zweiter Einstellparameter 28 erlaubt eine Einstellung eines Verlaufs eines Anstiegs einer Übertragungsfunktion H des einstellbaren Filters 24 von niedrigen Frequenzen f hin zu hohen Frequenzen f. Der Verlauf des Anstiegs der Übertragungsfunktion H kann beispielsweise einen Wert von +20 dB/Dekade, +40 dB/Dekade oder +60 dB/Dekade oder einen anderen Wert aufweisen. Die Hochfrequenz-Anhebung des einstellbaren Filters 24 kann beispielsweise 3 dB, 10 dB oder 20 dB bzw. einen von dem jeweiligen Kommunikationskanal, über den das empfangene Datensignal 12 empfangen wird, abhängigen Wert aufweisen.

Der Filtereinsteller 26 weist einen Vergleichswertspeicher 32 und einen Einstellparameterspeicher 34 auf. Der Vergleichswertspeicher 32 ist ausgebildet, um einen Vergleichswert zu speichern. Bei dem Vergleichswert kann es sich beispielsweise um einen minimalen Wert von temporären Maskenverletzungen handeln, den eine Anzahl von Variationen der Einstellparameter 27 und 28 temporär aufweist. Temporäre Variationen der Einstellparameter führen zu temporären Werten von Maskenverletzungen. Die temporären Werte von Maskenverletzungen können einen Minimalwert aufweisen, der ein temporäres Minimum der Filtereinstellung darstellen kann. Dieses temporäre Minimum kann für einen nächsten Iterationslauf, in welchem die Filtereinstellung weiter verbessert werden soll, als Vergleichswert gespeichert werden. Das bedeutet, dass der Filtereinsteller 26 ausgebildet ist, um ausgehend von einer Filtereinstellung diese (temporär) zu variierend, um die "beste" Variation mit der geringsten Anzahl von Maskenverletzungen zu bestimmen. Die Anzahl von Maskenverletzungen ist ein Hinweis auf eine Anzahl von Bitfehlern, die das gefilterte Datensignal 18 an einem Empfänger aufweist.

Der Einstellparameterspeicher 34 ist ausgebildet, um Einstellparameter 27 und 28 zu speichern. Der Filtereinsteller 26 ist ausgebildet, um den minimalen Wert der temporären Maskenverletzungen, der bei einer temporären Variation der Einstellparameter 27 und/oder 28 erreicht wird, mit einem Vergleichswert zu vergleichen, der in dem Vergleichswertspeicher 32 gespeichert ist.

Durch das Speichern von Einstellparametern in dem Einstellparameterspeicher 34 wird ermöglicht, dass beispielsweise, wenn der Filtereinsteller 26 feststellt, dass er keine weitere Reduzierung der Anzahl von Maskenverletzungen in einem Iterationslauf erzielen kann, die derzeit gefundenen Einstellparameter 27 und/oder 28 entweder in dem Einstellparameterspeicher 34 speichert und/oder die derzeitigen temporären Einstellparameter mit in dem Einstellparameterspeicher 34 gespeicherten Einstellparametern vergleicht. Sind die Einstellparameter 27 und/oder 28 bereits in dem Einstellparameterspeicher 36 gespeichert, ist der Filtereinsteller 26 ausgebildet, um das einstellbare Filter 24 mit der bestimmten Einstellung, d.h., den Einstellparametern 27 und 28 einzustellen. Ist die Vorrichtung 20 als Entzerrer ausgebildet, sind die Einstellparameter 27 und 28 Entzerrparameter.

Weist das gefilterte Datensignal 18 beispielsweise eine Anzahl von Maskenfehlern oder Maskenverletzungen bezüglich der Augenmaske auf, die als hinreichend klein angesehen wird, ist der Filtereinsteller 26 ausgebildet, um die Einstellparameter 27 und 28, die zu dieser hinreichend geringen Anzahl von Maskenverletzungen führt, in dem Einstellparameterspeicher 34 als mögliche Lösung der Optimierungsaufgabe zu speichern. Eine Anzahl von Maskenverletzungen, die hinreichen klein ist, bedeutet, dass die Anzahl von Maskenverletzungen eine vordefinierte Untergrenze unterschreitet oder den Wert der vordefinierten Untergrenze aufweist. Vereinfacht ausgedrückt, erreicht die Anzahl von Maskenverletzungen die vordefinierte Untergrenze.

Ferner ist der Filtereinsteller 26 ausgebildet, um eine Größe der Augenmaske zu erhöhen, wenn die vordefinierte Untergrenze erreicht oder unterschritten ist. Stellt der Filtereinsteller 26 in einem nachfolgenden Iterationsdurchlauf fest, dass bezüglich eines vorherigen Iterationsdurchlaufs keine weitere Reduzierung der Anzahl von Maskenverletzungen erzielbar ist, ist der Filtereinsteller 26 ausgebildet, um die Einstellparameter 27 und 28 mit in dem Einstellparameterspeicher 34 gespeicherten Einstellparametern zu vergleichen. Sind die derzeitigen Einstellparameter 27 und 28 bereits als mögliche Lösung in dem Einstellparameterspeicher 34 hinterlegt, so ist der Filtereinsteller 26 ausgebildet, um die derzeitigen Einstellparameter 27 und 28 zu verwenden, um das einstellbare Filter 24 einzustellen.

In anderen Worten können die Einstellparameter des CTLE derart implementiert werden, dass sie verschiedene Aspekte der Transferfunktion kontrollieren. Der erste Einstellparameter definiert zum Beispiel die Höhe der Spitzenverstärkung bei hohen Signalfrequenzen relativ zur Verstärkung bei niedrigen Signalfrequenzen. Diese Differenz kann einen positiven Wertebereich haben (z.B. 0dB bis +30dB), kann aber auch einen Wertebereich haben, der negative Verstärkung (d.h. Dämpfung bei hohen Frequenzen) zulässt (z.B. -10dB bis +30dB). Der zweite Einstellparameter kontrolliert z.B. den Übergang der Transferfunktion von niedrigen zu hohen Signalfrequenzen: z.B. ein gleichmäßiger langsamer Anstieg gegenüber einem langen, flachen Frequenzgang mit scharfem, steilen Anstieg bei hohen Frequenzen und auch Mischformen davon. Denkbar ist, dass ein dritter Einstellparameter Einfluss auf den Abfall der Transferfunktion bei und oberhalb der Signalbandbreite zulässt. So besteht eine Kontroll- und Ausgleichsmöglichkeit zwischen Rauschbandbreite der Schaltung und Phasenverzerrung bei hohen Frequenzen.

Im Zeitbereich besteht die Wirkung des CTLE darin, Amplituden kürzer Symbollängen wieder auf die Amplitudenhübe längerer Symbollängen anzuheben und die Nulldurchgänge bzw. Übergangsbereiche zwischen den Symbolen wieder auf einen kleineren Bereich der Symbolperiode (im Augendiagramm) zusammenzuschieben. Dafür sind sowohl Amplituden- als auch Phasengang von Bedeutung. Die Mehrzahl an Einstellparametern erlaubt größere Flexibilität sowohl bei der Annäherung an die Inverse des Kanals als auch beim Ausgleich zwischen Amplitudengang- und Phasengang-Kompensation. Der Augendiagramm-Monitor liefert das Qualitätskriterium, um die Einstellung präzise vorzunehmen.

Fig. 3 zeigt ein schematisches Ablaufdiagramm eines Verfahrens 300 zur Entzerrung eines empfangenen Datensignals gemäß einem Ausführungsbeispiel. Das Verfahren 300 kann von einem Filtereinsteller, etwa der Filtereinsteller 16 oder 26, ausgeführt werden. Das Verfahren 300 weist einen Optimierungsabschnitt 310 und einen Justageabschnitt 340 auf. Der Optimierungsabschnitt 310 weist Verfahrensschritte auf, um mittels einer Parametervariation in einem Zustand 312 Einstellparameter, etwa die Einstellparameter 27 und/oder 28 zu variieren und um in einem Schritt 314 zu überprüfen, ob mittels der Parametervariation des Zustands 312 eine Verbesserung bezüglich des gefilterten Datensignals erreicht wird. Hierfür kann der Filtereinsteller bspw. ausgebildet sein, um das einstellbare Filter mit unterschiedlichen Einstellparametern 27 und/oder 28 einzustellen und die Auswirkungen der Einstellungen auf das gefilterte Datensignal zu erfassen. Dafür ist der Filtereinsteller ausgebildet, um in dem Zustand 312 das gefilterte Datensignal mit einer Augenmaske zu vergleichen und um eine Anzahl von Maskenverletzungen, die das gefilterte Datensignal bezüglich der Augenmaske aufweist, zu bestimmen.

Eine Verbesserung des gefilterten Datensignals ist beispielsweise eine verringerte Anzahl von Maskenverletzungen, die das gefilterte Datensignal bezüglich einer Augenmaske aufweist. Wird eine Verbesserung erreicht, wird in einem Schritt 316 des Optimierungsabschnitts 310 überprüft, ob eine Anzahl von Maskenverletzungen, die etwa das gefilterte Datensignal bezüglich der Augenmaske aufweist, eine vordefinierte Untergrenze erreicht hat oder dieses unterschreitet. Die vordefinierte Untergrenze kann beispielsweise 0 sein, d.h. das gefilterte Datensignal weist keinerlei Maskenverletzungen auf. Alternativ kann die vordefinierte Untergrenze ein beliebiger anderer Wert sein, beispielsweise 0,1 %, 1 % oder 10 %. Das bedeutet, dass 0,1 %, 1 % oder 10 % der Symbole des gefilterten Datensignals bezüglich der Augenmaske eine Maskenverletzung aufweisen. Ist die vordefinierte Untergrenze nicht erreicht, ist der Filtereinsteller ausgebildet, um von dem Schritt 316 ausgehend in die Parametervariation 312 zurück zu springen, und um die Einstellparameter erneut zu variieren. Die Parametervariation 312 und die Schritte 314 und 316 bilden somit einen Iterationsdurchlauf (Iterationsschleife). Der Iterationsdurchlauf kann verlassen werden, wenn der Filtereinsteller in dem Schritt 314 feststellt, dass durch die Parametervariation 312 gegenüber einem vorherigen Iterationsdurchlauf keine weitere Verbesserung bezüglich der Maskenverletzungen des gefilterten Datensignals erzielt wird, oder wenn der Filtereinsteller in dem Schritt 316 feststellt, dass die vordefinierte Untergrenze erreicht ist.

Stellt der Filtereinsteller in dem Schritt 316 fest, dass die vordefinierte Untergrenze mit den variierten Einstellparametern erreicht ist, so markiert er die Einstellparameter, mit denen die vordefinierte Untergrenze erreicht wird, in einem Zustand 342 als mögliche Lösung, etwas durch Speichern der Einstellparameter in dem Einstellparameterspeicher. Anders ausgedrückt, stellt der Filtereinsteller fest, dass bezüglich der gegenwärtigen Maskengröße die derzeitigen Einstellparameter zu einem optimalen Ergebnis bzw. einer optimalen Entzerrung des empfangenen Datensignals führen, wenn das einstellbare Filter mit den Einstellparametern eingestellt ist.

Ferner wird in dem Zustand 342 die Größe der Augenmaske vergrößert. Das bedeutet, dass eine Wahrscheinlichkeit für eine Maskenverletzung erhöht sein kann. Von dem Zustand 342 ausgehend ist der Filtereinsteller ausgebildet, um die Parametervariation 312 des Optimierungsabschnitts 310 erneut auszuführen. In dem Optimierungsabschnitt 310 wird in Iterationsdurchläufen erneut mittels der Parametervariation 312 versucht, eine optimale Einstellung, etwa Einstellparameter 27 und/oder 28 für das einstellbare Filter 14 oder 24, zu ermitteln.

Stellt der Filtereinsteller 16 oder 26 in dem Schritt 314 fest, dass eine Variation der Parameter mittels der Parametervariation 312 zu keiner Verbesserung führt, wechselt der Filtereinsteller 16 oder 26 in einem Schritt 344 des Justagabschnitts 340. Der Filtereinsteller ist ausgebildet, um in dem Schritt 344 zu überprüfen, ob die Lösung, also der oder die Einstellparameter 27 und/oder 28, von denen aus keine weitere Verbesserung erzielt wird, in einer vorherigen Iteration als mögliche Lösung markiert wurden, etwa indem der Filtereinsteller überprüft, ob der oder die Einstellparameter in dem Einstellparameterspeicher hinterlegt sind.

Wurde die Lösung, von der aus keine weitere Verbesserung erzielt wird, in einer vorherigen Iteration als mögliche Lösung markiert, ist der Filtereinsteller ausgebildet, um diese Lösung in einem Schritt 347 als anzuwendende Lösung (Einstellung gefunden) zu nutzen und um das einstellbare Filter mit den gefundenen Einstellparametern einzustellen. Hierfür kann der Filtereinsteller den oder die Einstellparameter in einen Spannungs- oder Stromwert umrechnen und diesen an das einstellbare Filter anlegen, um das einstellbare Filter einzustellen. Alternativ kann der Einstellparameter auch der Spannungs- oder Stromwert sein. Vereinfacht ausgedrückt stellt der Filtereinsteller das einstellbare Filter mit den gefundenen Einstellparametern ein, wenn der oder die Einstellparameter bezüglich einer Maske mit einer ersten Größe eine Anzahl von Maskenverletzungen aufweisen, mit der eine vordefinierte Untergrenze erreicht wird (Schritt 316) und diese Einstellung bezüglich einer Maske mit einer zweiten, größeren Maskengröße eine Anzahl von Maskenverletzungen aufweist, die weiterhin die vordefinierte Untergrenze erreicht. Dies kann von dem Filtereinsteller so interpretiert werden, dass die Filtereinstellung bezüglich einer vergrößerten Augenmaske nicht verbessert werden kann.

Der Filtereinsteller kann ausgebildet sein, um die in einem Iterationsdurchlauf gefundene Filtereinstellung für eine Erreichung der Verbesserung in dem Zustand 312 an dem einstellbaren Filter anzulegen, d.h., das einstellbare Filter einzustellen, um eine Verbesserung von Iterationsdurchlauf zu Iterationsdurchlauf zu erreichen, bis die Iterationsschleife verlassen wird. Alternativ kann der Filtereinsteller ausgebildet sein, um die Einstellung rechnerisch zu bestimmen und um das einstellbare Filter mit der anzuwendenden Lösung in dem Schritt 347 einzustellen.

Stellt der Filtereinsteller in dem Schritt 344 fest, dass die Einstellparameter nicht in einer vorherigen Iteration als mögliche Lösung markiert wurden, so ist der Filtereinsteller ausgebildet, um die Augenmaske in einem Zustand 346 zu verkleinern und von dort ebenfalls in die Parametervariation 312 des Optimierungsabschnitts 310 zu wechseln. Vereinfacht ausgedrückt versucht der Filtereinsteller eine Lösung der Optimierungsaufgabe für eine verkleinerte Maske zu finden. Die verkleinerte Maske stellt eine geringere Anforderung an das gefilterte Datensignal, so dass das gefilterte Datensignal bezüglich der verkleinerten Maske eine verringerte Anzahl von Maskenverletzungen aufweisen kann. Durch die Verkleinerung der Maske im Zustand 346 kann verhindert werden, dass das Verfahren 300, etwa wenn es als Gradienten-Abstiegs-Verfahren implementiert wird, zu keiner Lösung führt. Die Maskengröße kann mittels des Zustands 346 so lange verkleinert werden, bis mittels der Parametervariation 312 in dem Schritt 314 eine Verbesserung festgestellt wird.

In anderen Worten ist der Filtereinsteller ausgebildet, um im Laufe des Verfahrens 300 die maximale Größe einer fehlerfreien Maske zu bestimmen. Damit ist die Bitfehlerrate bestimmbar. Eine große fehlerfreie Maske kann beispielsweise als ein gutes, d.h. hohes Signal-Rausch-Verhältnis (Signal-Noise-Ratio, SNR) zusammen mit geringer verbleibender Inter-Symbol-Interferenz (ISI) interpretiert werden.

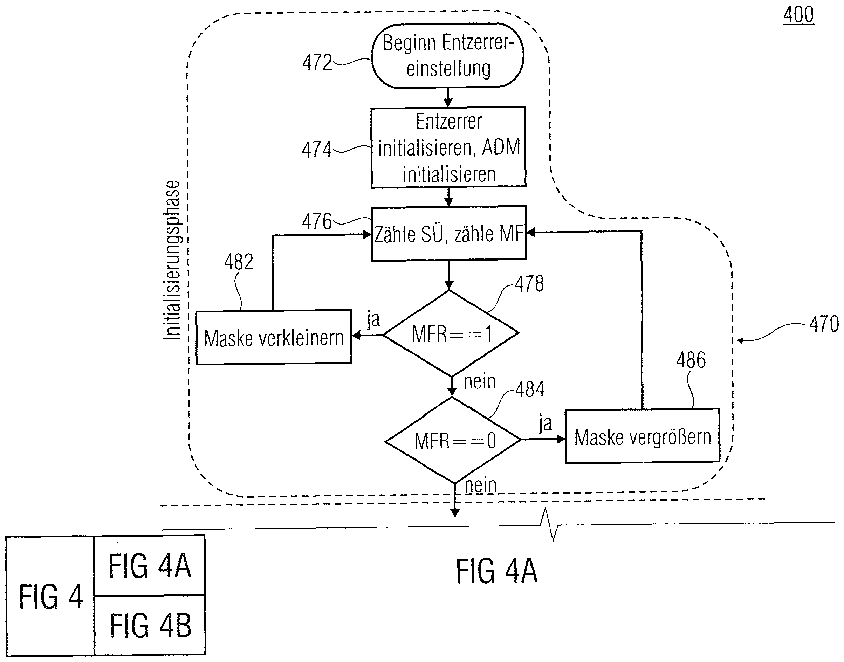

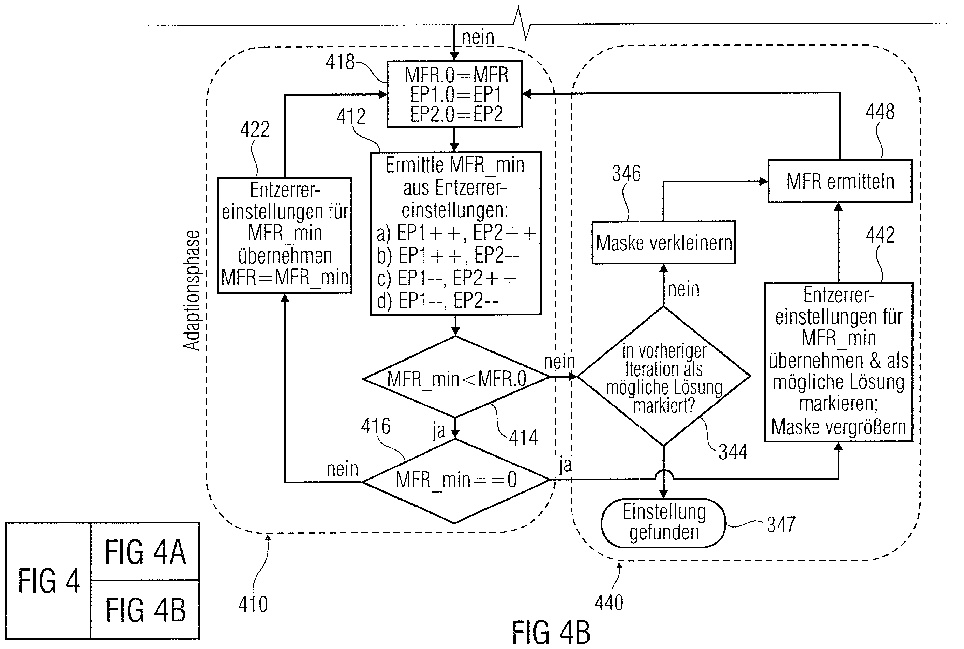

Fig. 4 zeigt ein schematisches Ablaufdiagramm eines Verfahrens 400 zur Entzerrung eines empfangenen Datensignals gemäß einem Ausführungsbeispiel. Das Verfahren 400 weist einen Optimierungsabschnitt 410, einen Justageabschnitt 440 und eine Initialisierungsphase 470 auf. Der Optimierungsabschnitt 410 und der Justageabschnitt 440 bilden zusammen eine Adaptionsphase des Verfahrens 400.

Ausgehend von einem Startpunkt 472 der Initialisierungsphase 470 wird in einem Zustand 474 der Entzerrer und der ADM initialisiert. Bei dem Entzerrer kann es sich beispielsweise um die Vorrichtung 10 oder 20 handeln. Die Initialisierung kann beispielsweise derart ausgeführt werden, dass der Filtereinsteller, der das Verfahren 400 ausführt, Speichervariablen zurücksetzt, eine bestimmte Maskengröße für den ADM einstellt, bestimmte initiale Einstellparameter an den Filter anlegt oder Rechenkapazität in einer Prozessoreinheit reserviert. Von dem Zustand 474 ausgehend wechselt der Filtereinsteller in den Zustand 476, in welchem eine Anzahl von Symbolübergängen und eine Anzahl von Maskenfehlern bestimmt wird. Dies erfolgt derart, dass eine Anzahl von Symbolübergängen (zähle SÜ) über einen bestimmten Zeitraum gezählt wird. Alternativ kann die Anzahl von Symbolübergängen so lange gezählt werden, bis eine bestimmte Anzahl von Symbolübergängen erreicht ist, beispielsweise 1.000, 10.000 oder 100.000. Ein Symbolübergang bezeichnet dabei den Wechsel eines Signalpegels des empfangenen oder gefilterten Datensignals von einem Informationswert zu einem anderen. Dies kann beispielsweise ein Wechsel von 0 auf 1 bzw. von 1 auf 0 sein. Alternativ kann ein Symbolübergang auch einen Übergang des Signalpegels von 00 auf 01, 10 oder 11 sowie beliebiger anderer Kombinationen darstellen. Ein Maskenfehler wird derart bestimmt, dass eine durch den ADM aufgespannte Maske verletzt wird (zähle MF).

Der Filtereinsteller ist ausgebildet, um die Maskenfehlerrate (MFR) zu bestimmen. Diese ergibt sich beispielsweise aus der Anzahl der Maskenverletzungen geteilt durch die Anzahl der Symbolübergänge, die beide in dem Zustand 476 bestimmt (gezählt) werden. Ferner ist der Filtereinsteller ausgebildet, um in einem Schritt 478 zu vergleichen, ob die Maskenfehlerrate (MFR) kleiner oder gleich einer vordefinierten Initialobergrenze ist. Die vordefinierte Initialobergrenze kann beispielsweise den Wert 1 (100 %) aufweisen. Das bedeutet, dass jeder Symbolübergang in dem Zustand 476 einen Maskenfehler aufweist. Alternativ kann es sich bei der Initialobergrenze auch um einen anderen Wert handeln, beispielsweise 70 %, 80 % oder 90 %.

Weist die Maskenfehlerrate einen Wert auf, der größer oder gleich der vordefinierten Initialobergrenze ist, so ist der Filtereinsteller ausgebildet, um in einem Zustand 482 die Größe der Maske zu verkleinern. Dies kann zu einer reduzierten Anzahl von Maskenverletzungen führen, die das gefilterte Datensignal bezüglich der Augenmaske aufweist.

Von dem Zustand 482 ausgehend, ist der Filtereinsteller ausgebildet, um in den Zustand 476 zurück zu wechseln, und um die Anzahl der Symbolübergänge und die Anzahl der Maskenverletzungen erneut zu bestimmen. Von dem Zustand 478 ausgehend ist der Filtereinsteller ausgebildet, um, wenn die Maskenfehlerrate, d.h. die Anzahl von Maskenfehlern, kleiner oder gleich bzw. kleiner als die vordefinierte Initialobergrenze ist, in einem Schritt 484 zu vergleichen, ob die Maskenfehlerrate größer als eine vordefinierte Initialuntergrenze ist. Die vordefinierte Initialuntergrenze kann beispielsweise einen Wert von 0 aufweisen (fehlerfreie Maske). Alternativ kann die vordefinierte Initialuntergrenze auch einen anderen Wert aufweisen, etwa 10 %, 20 % oder 30 %. Ist die Maskenfehlerrate kleiner oder gleich der vordefinierten Initialuntergrenze, so ist der Filtereinsteller ausgebildet, um in einen Zustand 486 zu wechseln, und in diesem die Größe der Maske zu erhöhen (Maske vergrößern). Von dem Zustand 486 ausgehend ist der Filtereinsteller ausgebildet, um in den Zustand 476 zurück zu wechseln, und um erneut die Anzahl von Symbolübergängen und die Anzahl von Maskenfehlern zu bestimmen.

Stellt der Filtereinsteller fest, dass die Maskenfehlerrate kleiner ist als die vordefinierte Initialobergrenze (478: nein) und größer ist als die vordefinierte Initialuntergrenze (484: nein), so ist der Filtereinsteller ausgebildet, um die Maskenfehlerrate als Vergleichswert (MFR.0) zu speichern. Ferner ist der Filtereinsteller ausgebildet, um die Einstellparameter des einstellbaren Filters, die die Maskenfehlerrate bezüglich der initialen Größe der Augenmaske aufweist als Vergleichswerte zu speichern, etwa in dem Vergleichswertspeicher 32. Dieser Speichervorgang ist einem Zustand 418 des Optimierungsabschnitts 410 dargestellt.

Vereinfacht ausgedrückt ist der Filtereinsteller ausgebildet, um in der Initialisierungsphase Initialisierungswerte bereitzustellen, die eine initiale Augenmaske mit einer initialen Größe, eine initiale Anzahl von Maskenverletzungen, die das gefilterte Datensignal bezüglich der initialen Augenmaske aufweist, und initiale Einstellparameter beschreiben. Der Filtereinsteller ist dabei ausgebildet, um die Initialisierungswerte basierend auf einer Anzahl von Maskenfehlern, die das gefilterte Datensignal während einer Anzahl von Symboldauern bzw. -Übergängen aufweist, bereitzustellen. Dies führt dazu, dass die Adaptionsphase mit einer Maskenfehlerrate und Einstellparameterwerten begonnen werden kann, die in jedem Fall eine Optimierung zulassen und gleichzeitig die Möglichkeit aufweisen, dass bei einer Variation der Einstellparameter auch eine Verschlechterung des Systems herbeigeführt werden kann. Dies ermöglicht beispielsweise bei einem Gradienten-Abstiegs-Verfahren, dass der Filtereinsteller erkennen kann, welche Variation der Einstellparameter zu einer Verbesserung und welche Variation zu einer Verschlechterung des Systems führt.

Der Filtereinsteller ist ausgebildet, um aus der Initialisierungsphase in die Adaptionsphase zu wechseln und, um in einem Zustand 412 eine Parametervariation der Einstellparameter auszuführen. Der Filtereinsteller ist dabei ausgebildet, um einen ersten Einstellparameter EP1 und einen zweiten Einstellparameter EP2 gleichzeitig zu variieren.

Die Einstellparameter EP1 und EP2 können bspw. die Einstellparameter 27 und/oder 28 sein. Die Einstellparameter EP1 und EP2 liegen beispielsweise als digitale Werte vor, so dass die Werte der Einstellparameter EP1 und EP2 inkrementiert (++) und/oder dekrementiert (--) werden können. Bei einer gleichzeitigen Variation beider Einstellparameter EP1 und EP2 ergeben sich somit vier mögliche Parametervariationen. Option a): eine Inkrementierung beider Einstellparameter EP1 und EP2, Option b) bzw. c): Inkrementierung eines Einstellparameters EP1 oder EP2 und Dekrementierung des jeweils anderen Einstellparameters EP2 bzw. EP1 und Option d): Dekrementierung beider Einstellparameter EP1 und EP2.

In anderen Worten ist der Filtereinsteller ausgebildet, um das einstellbare Filter schrittweise so einzustellen, dass eine Anzahl von Maskenverletzungen schrittweise reduziert ist.

Der Filtereinsteller ist somit ausgebildet, um ausgehend von einer ursprünglichen Filtereinstellung EP1.0 und EP2.0, etwa Initialisierungswerte oder Parameter eines vorausgegangenen Iterationsdurchlaufs, der eine ursprüngliche Anzahl von Maskenverletzungen MFR.0 zugeordnet ist, eine neue Filtereinstellung, der eine neue Anzahl von Maskenverletzungen zugeordnet ist, mittels einer schrittweisen Anpassung von Einstellparametern des einstellbaren Filters zu bestimmen. Alternativ zu einer gleichzeitigen Variation beider Einstellparameter EP1 und EP2 können die Einstellparameter EP1 und EP2 auch nacheinander verändert werden, etwa für eine Option a'): Inkrementierung von EP1, für eine Option b'): Dekrementierung von EP1, für eine Option c'): Inkrementierung von EP2 und für eine Option d'): Dekrementierung von EP2.

Die Variation mit unterschiedlichen Optionen a)-d) führt zu temporären Einstellparametern EP1++, EP2++, EP1-und/oder EP2--, die eine temporäre Anzahl von Maskenverletzungen bezüglich der Augenmaske aufweisen.

Der Filtereinsteller ist ferner ausgebildet, um in dem Zustand 412 einen minimalen Wert MFR_min der Maskenverletzungen für die aus den Optionen a)-d) oder a')-d')zu ermitteln. Das bedeutet, der Filtereinsteller ist ausgebildet, um diejenige Parametervariation zu ermitteln, die die größte Verbesserung der Maskenverletzungsrate bezüglich des gefilterten Datensignals und der Augenmaske aufweist. In anderen Worten ist der Filtereinsteller ausgebildet, um ausgehend von der ursprünglichen Filtereinstellung mit ursprünglichen Einstellparametern EP1.0 und EP2.0 eine Mehrzahl von temporären Filtereinstellungen (Optionen a)-d)), denen jeweils eine Anzahl von temporären Maskenverletzungen und temporäre Einstellparameter zugeordnet sind, zu bestimmen, wobei eine Mehrzahl von temporären Maskenverletzung einen minimalen Wert MFR_min aufweist, und wobei der Filtereinsteller ausgebildet ist, um den minimalen Wert MFR_min zu bestimmen. Das bedeutet, dass der Filtereinsteller ausgebildet ist, um in dem Zustand 412 das gefilterte Datensignal mit einer Augenmaske zu vergleichen und um eine Anzahl von Maskenverletzungen, die das gefilterte Datensignal bezüglich der Augenmaske aufweist, zu bestimmen und eine Mehrzahl von Messungen der Maskenfehlerrate für verschiedene Einstellparameter in Relation zu setzen. Anders ausgedrückt, existiert bspw. eine Funktion min*(), die eine Größenrelation auf die gemessenen Maskenfehlerraten implementiert. Diese Funktion kann auch die Positionen der jeweiligen Filter-Einstellparameter und die Anzahl der Signalübergänge während der Messung mit einbeziehen. So können auch Implementierungen umgesetzt werden, die über einen einfachen kleiner-Vergleich ("<") auf ganzen oder rationalen Zahlen hinausgehen. So kann zum Beispiel bei als zu klein erachteten Unterschieden die Messung der Maskenfehlerrate wiederholt werden und/oder kann der Abstieg über 3 oder mehr Messpunkte ermittelt werden.

Der Filtereinsteller ist ferner ausgebildet, um in einem Schritt 414 zu vergleichen, ob der minimale Wert MFR_min kleiner ist als der Vergleichswert MFR.0. Der Schritt 414 kann gleich ausgestaltet sein, wie der Schritt 314. Der Filtereinsteller ist ausgebildet, um ausgehend von dem Schritt 414, wenn eine Verbesserung erreicht wurde, in einen Schritt 416 zu wechseln und um zu vergleichen, ob der minimale Wert MFR_min kleiner oder gleich einer vordefinierten Untergrenze (0) ist. Der Schritt 416 kann gleich dem Schritt 316 sein. Ist die vordefinierte Untergrenze beispielsweise der Nullwert, kann diese zwar erreicht, jedoch nicht unterschritten werden. Weist die vordefinierte Untergrenze einen anderen, größeren Wert auf, kann die Maskenfehlerrate diesen minimalen Wert auch unterschreiten. Ist der minimale Wert MFR_min größer als die vordefinierte Untergrenze, ist der Filtereinsteller ausgebildet, um in einem Zustand 422 überzugehen. In anderen Worten ist der Filtereinsteller ausgebildet, um den minimalen Wert MFR_min der temporären Maskenverletzungen mit dem Vergleichswert MFR.0 zu vergleichen und um zu bestimmen, ob der minimale Wert der temporären Maskenverletzungen MFR_min kleiner oder gleich einer vordefinierten Untergrenze ist, wenn der minimale Wert der temporären Maskenverletzung MFR_min kleiner ist als der Vergleichswert MFR.0.

In dem Zustand 422 ist der Filtereinsteller ausgebildet, um diejenigen temporären Entzerrereinstellungen, die den minimalen Wert MFR_min aufweisen bzw. diesem zugeordnet sind, für einen nächsten Iterationslauf zu übernehmen, d.h. diesen zu speichern, beispielsweise in dem Vergleichswertspeicher 32. Dies ist in dem Zustand 422 der Fig. 4 durch die Formel MFR = MFR_min dargestellt. Der Filtereinsteller kann ferner ausgebildet sein, um in dem Zustand 422 das einstellbare Filter mit den bestimmten Einstellparametern (Entzerrereinstellungen) einzustellen, so dass bereits eine verbesserte Einstellung des einstellbaren Filters bezüglich des empfangenen Datensignals während der Adaptionsphase, d.h. ggf. bevor ein optimales Ergebnis von dem Filtereinsteller bestimmt ist, zu erhalten.

Der Filtereinsteller ist ausgebildet, um von dem Zustand 422 in den Zustand 418 zu wechseln und dort, wie es durch die Formel MFR.0 = MFR dargestellt ist, die Vergleichswerte zu aktualisieren und, um einen erneuten Iterationsdurchlauf zu starten. Das bedeutet, in dem Optimierungsabschnitt 410 werden die Einstellparameter so lange variiert, bis entweder keine Verbesserung mehr gegenüber einem vorherigen Iterationslauf erzielbar ist (Schritt 414) oder, bis eine vordefinierte Untergrenze erreicht ist (Schritt 416).

Wenn der Filtereinsteller in dem Schritt 416 feststellt, dass die vordefinierte Untergrenze erreicht oder unterschritten ist (MFR_min kleiner oder gleich der vordefinierten Untergrenze), so ist der Filtereinsteller ausgebildet, um von dem Schritt 416 ausgehend in einen Zustand 442 zu wechseln. In dem Zustand 442 ist der Filtereinsteller ausgebildet, um Einstellungen des Entzerrers, d.h. die Einstellparameter EP1 und EP2, die den minimalen Wert MFR_min aufweisen, zu übernehmen. Ferner ist der Filtereinsteller ausgebildet, um, etwa durch eine Speicherung der Einstellparameter EP1 und EP2 in dem Einstellparameterspeicher 34, die gefundene Lösung als mögliche Lösung zu markieren. Ferner ist der Filtereinsteller ausgebildet, um in dem Zustand 442 die Maskengröße zu erhöhen. Der Filtereinsteller kann ferner ausgebildet sein, um in dem Zustand 442 das einstellbare Filter mit den bestimmten Einstellparametern (Entzerrereinstellungen) einzustellen, so dass bereits eine verbesserte Einstellung des einstellbaren Filters bezüglich des empfangenen Datensignals während der Adaptionsphase, d.h. ggf. bevor ein optimales Ergebnis von dem Filtereinsteller bestimmt ist, zu erhalten.

Stellt der Filtereinsteller jedoch ausgehend von dem Schritt 414 fest, dass keine weitere Verbesserung bezüglich eines vorherigen Iterationslaufs erzielt wurde, so ist der Filtereinsteller ausgebildet, um in den Zustand 344 zu wechseln. Ist die Lösung, die den minimalen Wert MFR_min aufweist, nicht als mögliche Lösung markiert, so ist der Filtereinsteller ausgebildet, um die Maskengröße zu verringern, indem er in den Zustand 346 wechselt. Befindet sich der Filtereinsteller in dem Zustand 346 oder in dem Zustand 442, so ist der Filtereinsteller ausgebildet, um nach der jeweiligen Aktion in einen Zustand 448 überzugehen, dort die Maskenfehlerrate des gefilterten Datensignals bezüglich der Maske mit der veränderten Größe zu ermitteln und von dem Zustand 448 ausgehend in den Zustand 418 zu wechseln, um dort den Vergleichswert MFR.0 durch den in dem Schritt 448 ermittelten Wert der Maskenfehlerrate zu ersetzen.

Beispielsweise kann in dem Schritt 346, in welchem die Maske verkleinert wird, und durch eine anschließende Weiterbestimmung der Einstellparameter bestimmt werden, ob eine Variation des ersten Einstellparameters zu einer Verbesserung und eine Variation eines zweiten Einstellparameters zu einer Verschlechterung geführt hat, so dass sich die Verbesserung und die Verschlechterung aufheben und insgesamt keine Verbesserung gegenüber dem vorherigen Iterationsdurchlauf messbar ist. Der Filtereinsteller kann daraufhin die Parametervariation im Zustand 412 gemäß den Optionen a')-d') ausführen, um ein weiter verbessertes Ergebnis zu erreichen.

In anderen Worten ist der Filtereinsteller ausgebildet, um die neue Filtereinstellung unter Verwendung der temporären Einstellparameter zu bestimmen, die den minimalen Wert der temporären Maskenverletzungen zugeordnet sind, und um die temporären Einstellparameter als ursprüngliche Einstellparameter für eine zukünftige neue Filtereinstellung zu liefern.

Stellt der Filtereinsteller in dem Schritt 344 alternativ fest, dass die Lösung in einem vorherigen Iterationsdurchlauf als mögliche Lösung markiert wurde, so ist der Filtereinsteller ausgebildet, um in den Zustand 347 zu wechseln, d.h. die Filtereinstellung zu bestimmen und das einstellbare Filter einzustellen.

Vereinfacht ausgedrückt versucht der Filtereinsteller in Iterationsdurchläufen die Filtereinstellung schrittweise zu verändern, um die Maskenfehlerrate zu verringern und beendet diese Iterationsdurchläufe, wenn entweder die vordefinierte Untergrenze erreicht ist (Schritt 416) oder wenn keine Verbesserung mehr erzielbar ist (Schritt 414). In beiden Fällen wird die Maske verändert und die Iterationsdurchläufe mit der veränderten Maskengröße weiter bzw. erneut ausgeführt, außer die gefundene Lösung wurde bereits als mögliche Lösung markiert. Dann wird in dem Schritt 347 die Lösung bestätigt, d.h. die Einstellung ist gefunden.

In anderen Worten wird durch die Extraktion des für die Datenübertragung relevanten Qualitätskriteriums der Augenöffnung die Unsicherheit, die durch indirekte Methoden, wie mittlere Flankensteilheit oder mittlere Leistung in einem Frequenzband besteht, ausgeschlossen. Es bestehen nur noch Beschränkungen der Einzelschaltung, wie z.B. Offset, die sich jedoch mit einfachen Methoden kompensieren lassen. Diese Sicherheit bei der Charakterisierung ermöglicht, die beste, mit dem vorliegenden Entzerrer mögliche, Einstellung der Übertragungsfunktion vorzunehmen.

Durch den zweiten Freiheitsgrad des Entzerrers kann dessen Übertragungsfunktion sehr gut an den Kanal angepasst werden, so dass auch Prozessabweichungen, sich ändernde Betriebsbedingungen und Alterungsserscheinungen kompensiert werden können. Die Adaptierbarkeit liegt mit zwei Freiheitsgraden möglicherweise leicht unterhalb der eines Finite-Impulse-Response (FIR) Filters. Für praktisch vorkommende, an ein Medium gebundene Kanäle, ist die Adaptierbarkeit ausreichend groß, um eine gleichwertige Alternative zum FIR darzustellen. Implementierungen eines CTLE (CTLE-Versionen) mit mehr als zwei Koeffizienten, d.h., Freiheitsgraden, können die Flexibilität in der Transferfunktion bzw. des Systems weiter steigern und die mögliche Lücke zum FIR ganz oder zumindest teilweise schließen. Der CTLE bietet auf gleichem Halbleiterprozess dabei einen Geschwindigkeitsvorteil. Grund hierfür ist, dass ein CTLE ein zeitkontinuierlicher Entzerrer ist, der als analoge Schaltung implementiert wird. Für die Signalverarbeitungsoperation des CTLE sind somit keine digitalen Rechenoperationen erforderlich, das heißt, es wird nichts gerechnet. Alternativ existieren auch analoge Implementierungen von zeitdiskreten Entzerrern wie FFE (FIR) und DFE (IIR). Durch Summationsknoten für die Koeffizienten dieser Filter und den damit einhergehenden höheren (kapazitiven) Lasten ergeben sich bei diesen Topologien bereits bei niedrigeren Datenraten Bandbreiten-Probleme als das bei CTLE-Topologien der Fall ist. Oftmals brauchen FFE/DFE-Implementierungen deutlich mehr Fläche und Strom. Das direkte Qualitätskriterium der Augenöffnung macht ein selbstadaptierendes System mit einem CTLE mit zwei Freiheitsgraden erst möglich. Die präzise Einstellmöglichkeit erlaubt eine Reduzierung der Regelunsicherheit, die bei einer Selbstadaption eine erzielte Verbesserung wieder reduzieren ("auffressen") würde. Somit ist die Übertragungsfunktion besser kontrollierbar.

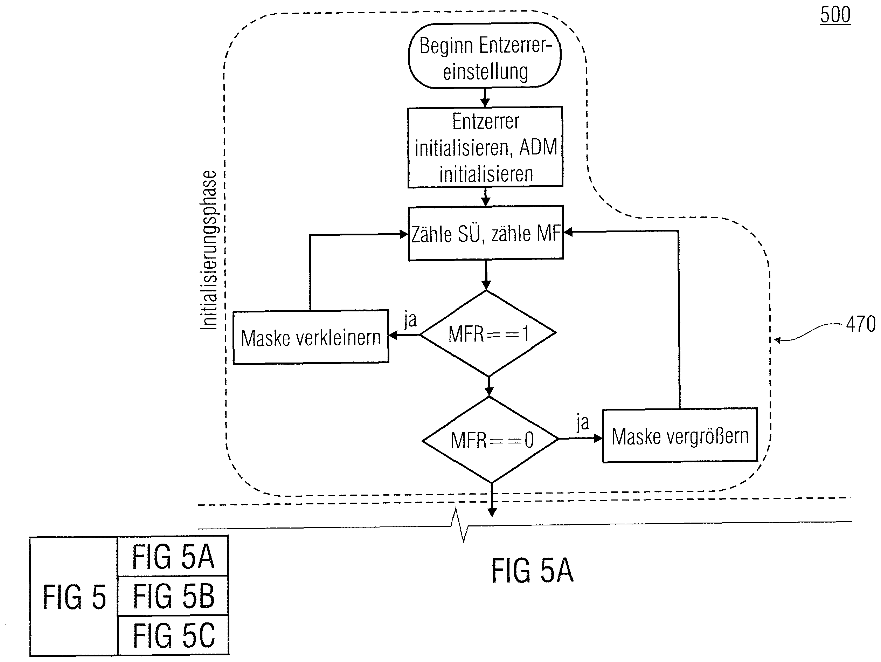

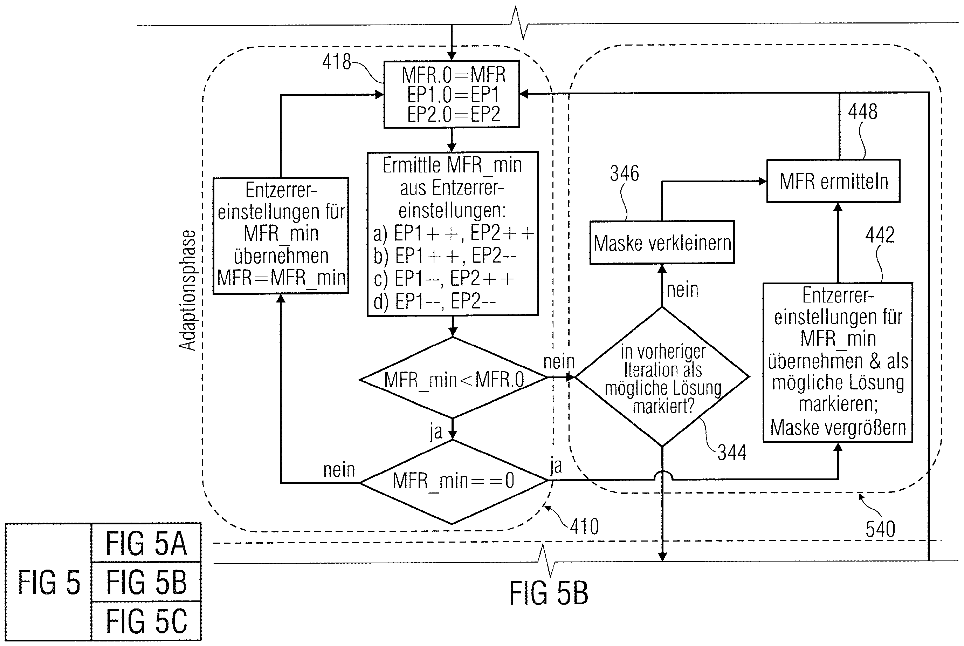

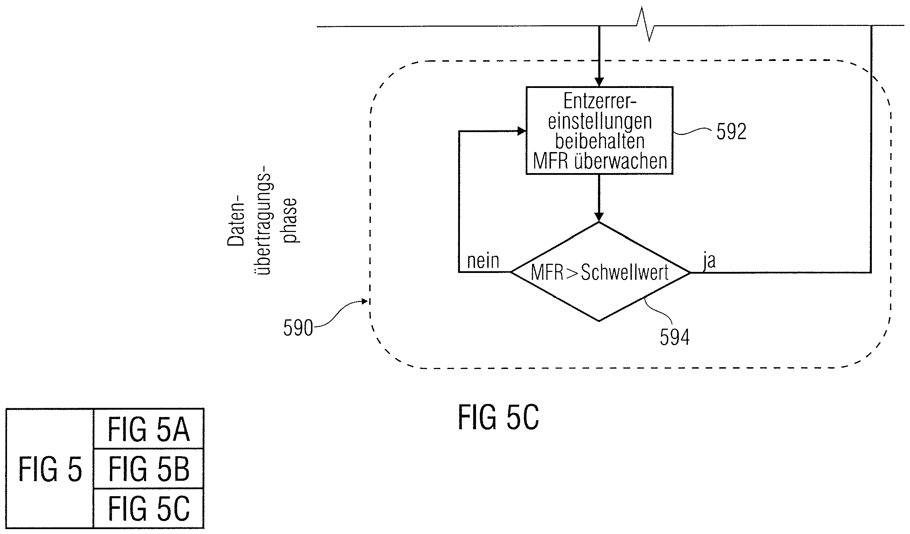

Fig. 5 zeigt ein schematisches Ablaufdiagramm eines Verfahrens 500 zur Entzerrung eines empfangenen Datensignals gemäß einem Ausführungsbeispiel. Gegenüber dem Verfahren 400 weist das Verfahren 500 eine zusätzliche Zustandsüberwachung 590 in einer Datenübertragungsphase auf. Anstelle des "Endzustands" 347 (Einstellung gefunden) ist der Filtereinsteller ausgebildet, um ausgehend von dem Schritt 344 in einen Zustand 592 zu wechseln, in dem der Filtereinsteller das einstellbare Filter mit der gefundenen Einstellung einstellt. In dem Zustand 592 werden die Entzerrereinstellungen beibehalten und die Maskenfehlerrate überwacht, d.h., die Maskenfehlerrate wird in gewissen Abständen oder zeitkontinuierlich erfasst.

Der Filtereinsteller ist ausgebildet, um in einem Schritt 594 zu bestimmen, ob die in dem Zustand 592 erfasste Maskenfehlerrate MFR größer ist als ein vordefinierter Schwellwert. Ist dies nicht der Fall, ist der Filtereinsteller ausgebildet, um in den Zustand 592 zurück zu wechseln. Vereinfacht ausgedrückt hat sich in diesem Fall das Kanalverhalten nicht oder nur geringfügig geändert, so dass eine Neueinstellung des einstellbaren Filters nicht erforderlich ist.

Ist jedoch die Maskenfehlerrate MFR in dem Schritt 594 größer als der Schwellwert, so ist der Filtereinsteller ausgebildet, um in den Zustand 418 zu wechseln und ausgehend von den aktuellen Einstellungen der Einstellparameter und der Maskenfehlerrate neue Filtereinstellungen zu bestimmen. In anderen Worten ermöglicht die Zustandsüberwachung 590 eine Selbstadaption im laufenden Betrieb (engl. Condition Monitoring). Ein Wechsel von dem Zustand 592 in den Schritt 594 kann beispielsweise in variablen oder festen Zeitintervallen oder basierend auf einer Benutzereingabe erfolgen.

Alternativ oder zusätzlich kann, wenn in einem laufenden Betrieb der Schwellwert überschritten wird, die Maskengröße variiert werden, während die Einstellparameter konstant gehalten werden.

Ferner kann der Filtereinsteller ausgebildet sein, um während der Datenübertragungsphase oder der Zustandsüberwachung 590 die Maskenfehlerrate über verschiedene Größen der Augenmaske aufzuzeichnen. Der Filtereinsteller kann ausgebildet sein, um basierend auf den aufgezeichneten Maskenfehlerraten eine Kurve der Maskenfehlerrate zu erstellen. Die Kurve der Maskenfehlerrate über die Maskengrößen ermöglicht eine genauere Charakterisierung des entzerrten Signals. So kann der Filtereinsteller bspw. bestimmen, ob das Augendiagramm von restlicher Inter-Symbol-Interferenz (abrupter Abfall der Maskenfehlerrate über Maskengröße) oder von Rauschen (allmählicher Abfall der Maskenfehlerrate über Maskengröße) dominiert wird. Des Weiteren kann der Filtereinsteller durch Extrapolation die Bitfehlerrate am eigentlichen (mittleren) Abtastpunkt bestimmen. Diese Information kann durch den Algorithmus im Filtereinsteller selbst für einen bessere Einstellung des Entzerrerfilters genutzt und/oder an höhere Netzwerk-Protokollschichten, mit denen der Filtereinsteller kommuniziert, z.B. zur Diagnostik/Fehlerbehandlung oder einfach zur Überwachung weitergegeben werden.

Fig. 6 zeigt eine schematische Darstellung einer Augenmaske 62, die bezüglich des gefilterten Datensignals 18 aufgespannt wird. Das empfangene Datensignal und das gefilterte Datensignal 18 sind ein binäres Datensignal, das zwei logische Zustände "0" und "1", denen Amplitudenwerte V_{H} (1) und V_{L} (0) zugeordnet sind, aufweist. Die Amplitudenwerte können Werte einer elektrischen Spannung sein, die das gefilterte Datensignal 18 aufweist, etwa -1 V, 0 V, 1 V oder 2 V für einen Niedrig-Pegel (Low - L) und/oder 0,5 V, 1 V, 3,5 V, 5 V, und/oder 12 V für einen Hoch-Pegel (High - H). Alternativ kann das gefilterte Datensignal 18 auch mehrere logische Zustände, etwa "00", "01", "10" und/oder "11" aufweisen (Multibit-Signal). Die mehreren logischen Zustände können einen äquidistanten oder von einander verschiedenen Abstand der Amplitudenwerte zueinander aufweisen. Ein Augendiagramm und/oder eine Augenmaske eines Multibit-Signals kann mehrere Öffnungen aufweisen. Der Filtereinsteller kann ausgebildet sein, um eine Maskenverletzung bezüglich einer oder mehrerer der mehreren Öffnungen zu bestimmen. Das gefilterte Datensignal 18 wird zu einem Zeitpunkt t_{T}, das bspw. den Takt des gefilterten Datensignals 18 darstellt, von einem Empfänger und/oder dem Filtereinsteller abgetastet.

Die Augenmaske 62 weist vier Referenzpunkte 64a-d auf. Ein erster Referenzpunkt 64a und ein zweiter Referenzpunkt 64b sind durch einen Abtastzeitpunkt t₁ bestimmt, welcher vor dem Zeitpunkt t_{T} angeordnet ist. Ein dritter Referenzpunkt 64c und ein vierter Referenzpunkt 64d werden durch einen Abtastzeitpunkt t₂ bestimmt, welcher nach dem Zeitpunkt t_{T} angeordnet ist. Der erste und der zweite Referenzpunkt 64a und 64b weisen einen ersten zeitlichen Versatz (t_{T}-t₁) bezüglich des Signaltakts t_{T} auf. Der dritte Referenzpunkt und der vierte Referenzpunkt 64c und 64d weisen einen zweiten zeitlichen Versatz (t₂-t_{T}) bezüglich des Signaltakts t_{T} auf. Die Zeitpunkte t₂ und t₁ weisen einen zeitlichen Abstand von Δt=t₂-t₁ zueinander auf, wobei der zeitliche Abstand Δt kleiner als eine Symboldauer des gefilterten Datensignals 18 sein kann. Der zeitliche Abstand Δt entspricht einer horizontalen Öffnung der Augenmaske 62. Die bezüglich einer Bitfehlerrate gemessene horizontale Augenöffnung, die größer oder gleich des horizontalen zeitlichen Abstands Δt bezogen auf eine fehlerfreie Maske ist, kann auch als Jittertoleranz des gefilterten Datensignals 18 beschrieben werden.

Jeder der vier Referenzpunkte 64a-d weist einen Amplitudenwert auf, wobei die Referenzpunkte 64a und 64c einen Amplitudenwert V₂ und die Referenzpunkte 64b und 64d einen Amplitudenwert V₁, der kleiner ist als der Amplitudenwert V₂, aufweisen. Die Amplitudenwerte V₂ und V₁ weisen einen amplitudenmäßigen Abstand ΔV=V₂-V₁ auf. Der amplitudenmäßige Abstand ΔV entspricht einer vertikalen Öffnung der Augenmaske.

Ein Filtereinsteller, beispielsweise der Filtereinsteller 16 oder 26, kann ausgebildet sein, um das gefilterte Datensignal 18 zu den Zeitpunkten t₁ und t₂ abzutasten und um zu vergleichen, ob der abgetastete Signalwert des gefilterten Datensignals 18 größer ist als der Amplitudenwert V₁ und kleiner als der Amplitudenwert V₂, d.h. ob sich das gefilterte Datensignal 18 zu einem der Zeitpunkte t₁ bzw. t₂ zwischen dem ersten und dem dritten Referenzpunkt 64a und 64c oder zwischen dem dritten und dem vierten Referenzpunkt 64c und 64d, d.h., innerhalb der Augenmaske 62, befindet.

Ein Wechsel zwischen zwei logischen Zuständen 0 oder 1 des empfangenen oder gefilterten Datensignals stellt einen Symbolübergang dar. Ein Symbolübergang von 0 auf 1 und von 1 auf 0 ist beispielhaft für die gestrichelte Linie 66 dargestellt. Zum Zeitpunkt t₂ führt das gefilterte Datensignal 18, dargestellt durch die gestrichelte Linie 66, eine Maskenverletzung aus. Der Spannungswert des gefilterten Datensignals 18 liegt für die gestrichelte Linie 66 zwischen dem Spannungspegel V₁ und V₂. Eine Maskenverletzung kann so verstanden werden, dass ein Signalverlauf des gefilterten Datensignals 18 zumindest teilweise innerhalb der Augenmaske 62 verläuft. Dies kann mittels Schwellwertvergleichen zu den Zeitpunkten t₁, t₂ und/oder t_{T} von dem Filtereinsteller festgestellt werden.

Der Filtereinsteller kann ausgebildet sein, um die Maskengröße der Augenmaske 62 zu verändern, indem der zeitliche Abstand Δt und/oder der amplitudenmäßige Abstand ΔV verändert wird. Eine Reduzierung des zeitlichen Abstandes Δt und/oder des amplitudenmäßigen Abstandes ΔV (Verkleinerung der Maske) kann dazu führen, dass das Datensignal 18 bezüglich der gestrichelten Linie 66 keine Maskenverletzung mehr aufweist.

Die Variation der Einstellparameter durch den Filtereinsteller ermöglicht eine Variation des gefilterten Datensignals 18 etwa bezüglich einer Flankensteilheit, die das gefilterte Datensignal 18 bei einem Symbolübergang aufweist. Somit ermöglicht die Variation der Einstellparameter eine Veränderung der Maskenverletzungen, die das gefilterte Datensignal bezüglich der der Augenmaske 62 im Zeit- und/oder im Amplitudenbereich aufweist. Bspw. kann die Variation der Einstellparameter dazu führen, dass die gestrichelte Linie 66 "später" abfällt und zu dem Zeitpunkt t₂ einen Amplitudenwert aufweist, der größer ist, als der Amplitudenwert V₂, d.h., es liegt keine Maskenverletzung der gestrichelten Linie 66 bezüglich der Augenmaske 62 vor.

Alternativ kann der erste und der zweite Referenzpunkt 64a und 64b einen voneinander verschiedenen Abtastzeitpunkt darstellen. Alternativ oder zusätzlich kann der dritte und der vierte Abtastzeitpunkt einen voneinander verschiedenen zeitlichen Abstand darstellen.

Das bedeutet, dass die Augenmaske 62 eine rechteckige oder eine andere viereckige Form aufweisen kann. Die vier Referenzpunkte 64a-d können einen jeweils voneinander verschiedenen zeitlichen Versatz bezüglich des Taktes t_{T} des gefilterten Datensignals 18 und einen voneinander verschiedenen Amplitudenwert aufweisen.

Die Zeitpunkte t₁ und t₂ können insbesondere symmetrisch um den Zeitpunkt t_{T} angeordnet sein. Bezüglich eines mittleren Amplitudenwerts (V_{H}+V_{L})/2 weist die Augenmaske 62 vier Felder auf. Der Filtereinsteller ist ausgebildet, um eine Maskenverletzung des empfangen Datensignals 18 bezüglich der Augenmaske 62 bezüglich jedes der vier Felder festzustellen. Die vier Felder weisen einen gemeinsamen Berührungspunkt 68 auf, der einen Amplitudenwert (V_{H}+V_{L})/2 zum Zeitpunkt t_{T} aufweist. Die Amplitudenwerte V₁ und V₂ können symmetrisch um die mittlere Spannung (V_{H}+V_{L})/2 angeordnet sein.

Ein Optimierungsziel des Filtereinstellers ist beispielsweise eine niedrigste Bitfehlerrate, die in einer weitesten Augenöffnung, d.h. einer größten Jittertoleranz (horizontale Öffnung) beschrieben werden kann. Das bedeutet, dass der Filtereinsteller ausgebildet ist, um das Augendiagramm und mithin ein direktes Qualitätskriterium zu optimieren.

In anderen Worten zeigt Fig. 6 einen Augendiagrammmonitor (ADM) mit 4+1 Abtastpunkten und einer Maskenverletzung "rechts oben". Während einer Periode (Symboldauer des empfangenen oder gefilterten Datensignals) finden fünf Schwellwertvergleiche statt. Die zeitliche Differenz zwischen t₁ bzw. t₂ und t_{T} kann beispielsweise mittels Verzögerungsleitungen, variablem Abgriff in einer Takt-Buffer-Kette oder mit separaten Takt-Phasen-Interpolatoren realisiert werden.

Der Filtereinsteller ist somit ausgebildet, den ADM derart zu implementieren, dass er einen gleichen Takt wie die Symbolrate des gefilterten Datensignals 18 aufweist und auf eine Überabtastung verzichtet werden kann.

In anderen Worten kommt ein Augendiagramm-Monitor (ADM) zur Extraktion des direkten Qualitätskriteriums, der Bitfehlerrate, zum Einsatz. Je nach Zweck gibt es verschiedene Ausformungen, was die gemessenen Dimensionen, die Auflösung und die Echtzeitfähigkeit des Augendiagramms angeht. Grundsätzlich wird von einem Augendiagramm-Monitor ein Amplituden- und/oder Zeitbereich relativ zu einem Takt, der vorzugsweise die ideale Symbolmitte anzeigt, charakterisiert.

Für den Einsatz in einem Datenübertragungssystem ist die Echtzeitfähigkeit des Systems von Bedeutung. Dazu "spannt" der ADM bspw. eine Maske aus vier Abtastpunkten auf, die jeweils relativ zum Symboltakt phasen- und amplitudenversetzt sind. Die Verletzung der Augenmaske kann dabei durch die insgesamt fünf zur Verfügung stehenden Abtastpunkte (vier des ADM und eines des Daten-Abtasters selbst) in vier Feldern detektiert werden. Die Größe der Maske ist während der Laufzeit konfigurierbar. Damit lassen sich für die vier Felder Maskenfehlerraten ermitteln bzw. die Größe der Maske so einstellen, bis eine gewünschte Maskenfehlerrate erreicht wird. Dies kann z.B. "fehlerfrei" bedeuten, das heißt, die vordefinierte Untergrenze weist einen Wert von 0 auf. Es können aber auch Maskenfehlerraten über die Variation der Größe der Maske ermittelt werden, um Vorhersagen über die Bitfehlerrate zu ermöglichen bzw. die vorhandenen Marge bezüglich Rauschen und Intersymbol-Interferenz bis zu einer gewünschten Bitfehlerrate zu ermitteln.

Eine Maskenverkleinerung kann bis hin zu einem Minimalwert von dem Filtereinsteller ausgeführt werden. Der Minimalwert kann beispielsweise 100 mV für ΔV an einem Symbolentscheider des Filtereinstellers bedeuten. Alternativ kann der Minimalwert auch kleiner, beispielsweise 50 mV oder größer, beispielsweise 200 mV aufweisen. Der Symbolentscheider kann beispielsweise mittels eines Komparators oder eines FlipFlop-Bausteins ausgeführt sein. Der Filtereinsteller kann ausgebildet sein, um die Maskengröße bezüglich des amplitudenmäßigen Abstandes ΔV in Schrittweiten von etwa 1 mV, 5 mV, 10 mV, 50 mV, 100 mV oder 1 V einzustellen. Alternativ oder zusätzlich kann der Filtereinsteller ausgebildet sein, um die Maskengröße bezüglich des amplitudenmäßigen Abstandes ΔV mit analogen Werten einzustellen. Der Filtereinsteller kann ferner ausgebildet sein, um die Maskengröße bezüglich des zeitlichen Abstands Δt in Schrittweiten von etwa 1 ps, 10 ps, 100 ps, 1 ns, 100 ns oder 1 ms einzustellen. Alternativ oder zusätzlich kann der Filtereinsteller ausgebildet sein, um die Maskengröße bezüglich des zeitlichen Abstands Δt mit analogen Werten einzustellen. Anders ausgedrückt kann die Auflösung der Maskengröße im Amplituden- und Zeitbereich so von dem Filtereinsteller gewählt sein, dass ein ideal entzerrtes (gefiltertes) Datensignal ausreichend gut charakterisiert/vermessen werden kann. Die Auflösung des Zeitbereichs kann derart implementiert werden, dass die Periodendauer der Empfangstakt in eine Anzahl von P in etwa gleich große Schritte aufgelöst wird. Der Vorteil dieser Implementierung liegt darin, dass die Zeitauflösung mit einer sich ändernden Datenrate mit skalierbar ist. Der Empfangstakt kann mit Hilfe von Schaltungsblöcken aus dem empfangenen Datensignal zurückgewonnen werden. Der Amplituden- und Zeitbereich kann jeweils ein minimalen und ein maximalen Einstellwert haben. Der minimale Wert kann größer 0 sein. Der maximale Wert ist vorzugsweise die maximale erwartete Symbolausdehnung im Amplituden bzw. Zeitbereich.

Diese Maskenfehlerrate oder Größe einer fehlerfreien Maske ist nun das Minimierungs- bzw. Maximierungsziel eines Algorithmus zur Einstellung des Entzerrers, etwas des Verfahrens 300, 400 oder 500. Dabei kann z.B. ein einfaches Gradienten-Abstiegs-Verfahren zum Einsatz kommen. Diese Methode kann schon bei einem Entzerrer mit nur einem Freiheitsgrad zum Einsatz kommen und bewirkt dort eine Verbesserung des Systems. Durch die direkte Metrik kann erreicht werden, dass für jede Betriebssituation des Entzerrers mit Kanal die beste mögliche Einstellung ausgewählt werden kann.

Vorzugsweise wird die ADM-Methode jedoch mit einem Entzerrer mit mehr als einem Freiheitsgrad kombiniert, etwa der Vorrichtung 20. In Vorrichtung 20 sind zwei Freiheitsgrade des einstellbaren Filters implementiert. Die erste Kontrollgröße erlaubt die Grobeinstellung der Hochfrequenz-Anhebung, während die zweite Kontrollgröße den Verlauf des Anstiegs der Übertragungsfunktion von niedrigen zu hohen Frequenzen hin beeinflusst. Diese zweite Kontrollmöglichkeit erlaubt es, die Übertragungsfunktion deutlich besser an verschiedene Kanäle anzupassen und so geringe Intersymbol-Interferenz, d.h. eine größere Augenöffnung am Ausgang des Entzerrers zu erhalten. Dabei ist es für das System von entscheidender Bedeutung, dass erst das Qualitätskriterium der Maskenfehlerrate bzw. Größe der fehlerfreien Maske ausreichend präzise die Signalqualität charakterisiert (direktes Qualitätskriterium) und gleichzeitig über den Parameterraum eindeutig ist und somit die automatische Adaption beider Freiheitsgrade des Entzerrers ermöglicht.

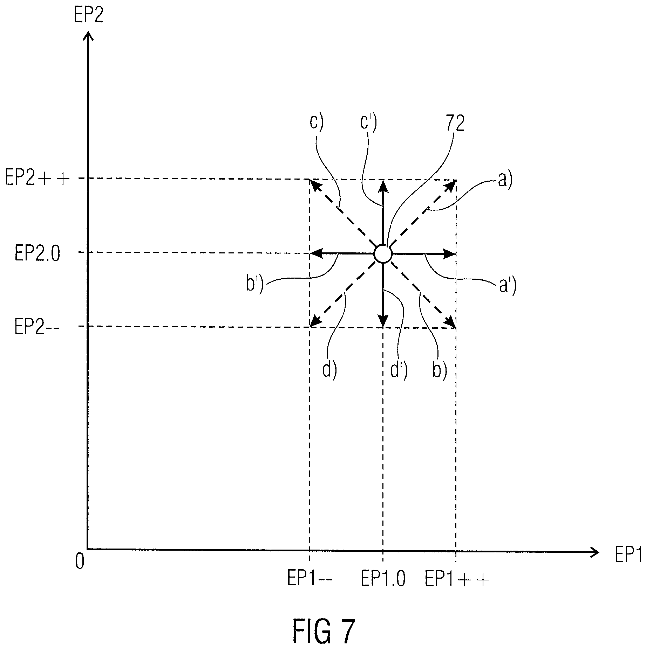

Fig. 7 zeigt einen schematischen Graph, bei dem an der Abszisse der Einstellparameter 1 (EP1) und an der Ordinate der Einstellparameter 2 (EP2) aufgezeichnet ist. Anhand von Fig. 7 wird nachfolgend dargelegt, wie sich die Optionen a)-d) von den Optionen a')-d'), wie sie in Fig. 4 beschrieben sind, unterscheiden. Die Optionen a)-d) sind als gestrichelte Pfeile dargestellt, die Optionen a')-d') sind als durchgezogenen Pfeile dargestellt. Bei einer Variation der Einstellparameter EP1 und/oder EP2, die die Einstellparameter 27 und 28 sein können, ist der Filtereinsteller ausgebildet, um zumindest einen der Einstellparameter EP1 oder EP2 zu variieren. Bei einer gleichzeitigen Variation beider Einstellparameter EP1 und EP2 in den Optionen a)-d) wird ein Gradient des Gradienten-Abstiegs-Verfahrens entlang der beiden Dimensionen EP1 und EP2 gleichzeitig variiert, so dass die gestrichelten Pfeile diagonal verlaufen. Alternativ werden die Gradienten, wenn der Filtereinsteller die Parametervariation mittels der Optionen a')-d') ausführt, der Gradient entlang jeweils einer Richtung EP1 oder EP2 variiert. Die durchgezogenen Pfeile verlaufen horizontal oder vertikal. Beispielhaft sind die Optionen a)-d) und a')-d') für Inkrementierungen (++) und Dekrementierungen (--) der Einstellparameter EP1 und EP2 dargestellt. Alternativ kann eine Variation der Einstellparameter EP1 und/oder EP2 mit einer anderen Schrittweite oder kontinuierlich erfolgen.

In anderen Worten unterscheiden sich die Optionen a)-d) von den Optionen a')-d') dadurch, dass die Richtung des Gradienten-Abstiegs-Verfahrens verändert wird.

Alternativ kann der Filtereinsteller ausgebildet sein, um zwischen den Optionen a)-d) und a')-d') zu wechseln. Wird beispielsweise bei einer gleichzeitigen Variation der Einstellparameter (EP1) und (EP2) keine Verbesserung der Anzahl von Maskenverletzungen erzielt, so kann mittels eines Wechsels auf die Optionen a')-d') von dem Filtereinsteller überprüft werden, ob eine Variation in jeweils nur einer Richtung zu einer Verbesserung führen kann.

Alternativ zu vorangegangenen Ausführungsbeispielen kann der Filtereinsteller ausgebildet sein, um anstelle des Gradienten-Abstiegs-Verfahrens einen anderen Optimierungsalgorithmus, beispielsweise einen sogenannten Down-Hill-Simplex-Algorithmus einzusetzen. Alternativ zu vorangegangenen Ausführungsbeispielen kann der Filtereinsteller ausgebildet sein, um anstelle einer Minimierung der Maskenfehlerrate die Optimierung dahingehend auszuführen, dass eine Maximierung, etwa einer Anzahl fehlerfreier Symbole ein Ziel der Optimierung ist.

Um die Konvergenz zu einem lokalen Optimum (Minimum) zu vermeiden, kann der Filtereinsteller ausgebildet sein, um zusätzliche Maßnahmen auszuführen, wie etwa eine initiale Phase einer Monte-Carlo-Studie. Der Filtereinsteller kann ausgebildet sein, um dabei nicht von einem Startpunkt aus zu optimieren, sondern den Parameterraum mittels einer Anzahl von M zufälligen Startpunkten abzutasten, um daraus den optimalen Startpunkt und daher den Startpunkt mit der wahrscheinlichsten Nähe zum globalen Optimum festzulegen. Die Anzahl M kann sich nach der Größe des Parameterraumes, der Unstetigkeit des Parameterraumes bezüglich des Qualitätskriteriums und/oder der Anforderungen an die Konvergenzgeschwindigkeit richten.

Alternativ oder zusätzlich kann anstelle einer konstanten Schrittweite der Inkremente oder Dekremente eine variable Schrittweite für die Parametervariation nutzbar sein, so dass der Filtereinsteller beispielsweise ausgebildet ist, um bei einer großen Verbesserung der Bitfehlerrate bzw. der Maskenverletzung von einem Iterationsdurchlauf auf einen nachfolgenden Iterationsdurchlauf eine große Schrittweite auszuführen. Dies kann eine normierte Erhöhung der Einstellparameter EP1 und/oder EP2 um Werte von 2, 3, 5 oder 10 oder andere Werte bedeuten. Der Filtereinsteller kann ausgebildet sein, um bei einer geringen von dem Filtereinsteller festgestellten Verbesserung die Schrittweite zu verkleinern. Vorteilhaft an einer variierenden Schrittweite ist, dass eine optimale Filtereinstellung schneller gefunden werden kann. Die schnellere Bestimmung der Filtereinstellung wird durch die erhöhte Schrittgröße ermöglicht.

Obwohl in vorangegangenen Ausführungsbeispielen beschrieben wird, dass der Filtereinsteller ausgebildet ist, um das einstellbare Filter in den Zuständen 347 und/oder 592 einzustellen, kann der Filtereinsteller auch ausgebildet sein, um das einstellbare Filter in den Zuständen 312 oder 412, das bedeutet während der Parametervariation, einzustellen und ausgehend von den Zuständen 312 oder 412 für weitere Verfahrensschritte und/oder Zustände diejenige Filtereinstellung beizubehalten, die den minimalen Wert der temporären Maskenverletzungen aufweist. In diesem Fall kann in den Zuständen 347 oder 592 die Filtereinstellung beibehalten werden.

Die vorangegangenen Ausführungsbeispiele zeigen einen verbesserten zeitkontinuierlichen Entzerrer (Continous Time Linear Equalizer - CTLE) mit einem, zwei oder mehreren Freiheitsgraden zur Einstellung der Übertragungsfunktion zusammen mit der direkten Bewertung der Signalqualität über einen Augendiagramm-Monitor (ADM). Der ADM ermöglicht die automatische Adaption des CTLE mit ein, zwei oder mehr Freiheitsgraden und somit einen praktischen Entzerrer mit besseren Ergebnissen über Kanal- und Prozessvariation.

Alternativ zu vorangegangen Ausführungsbeispielen kann das einstellbare Filter auch mehr als zwei Freiheitsgrade aufweisen. Der Filtereinsteller ist in diesem Fall ausgebildet, das einstellbare Filter basierend auf Filtereinstellungen mit mehr als zwei Einstellparametern einzustellen.

Ausführungsbeispiele der vorliegenden Erfindung können beispielsweise in leitungsgebundenen Hochgeschwindigkeits-Datenübertragungs-Systemen mit einer Entzerrung am Empfänger eingesetzt werden.

In anderen Worten beschreiben Ausführungsbeispiele einen zeitkontinuierlichen Entzerrer mit zwei Freiheitsgraden und Augendiagramm-Monitor bzw. einen selbst-adaptiven zeitkontinuierlichen Entzerrer mit zwei Freiheitsgraden und Augendiagramm-Monitor für Hochgeschwindigkeits-Datenübertragungen.

Alternativ können vorausgegangene Ausführungsbeispiele eingesetzt werden, um in Messgeräten eine Charakterisierung von Signalen und/oder Übertragungskanälen vorzunehmen. So kann beispielsweise eine Signal-Rausch-Verhältnis-Einstellung basierend auf dem ADM vorgenommen werden. Die selbstadaptive Nutzung mittels eines Filtereinstellers, der einen ADM implementiert, ermöglicht eine Erstellung eines eindeutigen Qualitätsdiagramms, da ein direktes Qualitätskriterium ausgewertet wird.

Im Gegensatz zu bekannten Konzepten, die eine CTLE-Struktur als einen Teil eines größeren, hybriden Entzerrers benutzen, der ferner eine Transversalfilterstruktur wie etwa eine DFE- oder FIR-Struktur umfasst, ermöglichen vorangegangen beschriebene Ausführungsbeispiele eine Verwendung eines CTLE ohne zusätzliche Entzerrerstruktur. Ein zumindest zwei-dimensionaler, d..h. einen ersten und einen zweiten Einstellparameter aufweisenden CTLE, ermöglicht somit die Bereitstellung eines Kommunikationssystems, in welchem ein Signalsender ausgebildet ist, um unverzerrte Daten zu senden. Am Empfänger können vorangehend beschriebene Ausführungsbeispiele ermöglichen, das unverzerrt gesendete Datensignal korrekt zu entzerren, indem am Empfänger ein zumindest zwei-dimensionaler CTLE mit Augenöffnungsmonitor und/oder Filtereinsteller genutzt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10; 20) zur Entzerrung eines empfangenen Datensignals (12), mit:
einem einstellbaren analogen Filter (14; 24), das ausgebildet ist, um das empfangene Datensignal (12) zu filtern und um ein gefiltertes Datensignal (18) basierend auf dem empfangenen Datensignal (12) zu liefern; und
einem Filtereinsteller (16; 26), der ausgebildet ist, um
das gefilterte Datensignal (18) mit einer Augenmaske zu vergleichen (312; 412);
um eine Einstellung des einstellbaren Filters (14; 24) basierend auf einer der Augenmaske (62) zugeordneten Anzahl von Maskenverletzungen (MF; MFR), die das gefilterte Datensignal (18) bezüglich der Augenmaske (62) aufweist, zu bestimmen; und
das einstellbare Filter (14; 24) basierend auf der bestimmten Einstellung einzustellen (347; 592);
wobei das einstellbare Filter (14; 24) einen ersten Einstellparameter (27) und einen zweiten Einstellparameter (28) aufweist und wobei der Filtereinsteller (16; 26) ausgebildet ist, um das einstellbare Filter (14; 24) bezüglich des ersten und des zweiten Einstellparameters (27, 28) einzustellen; und
wobei der erste Einstellparameter (27) eine Einstellung der Hochfrequenzanhebung des einstellbaren Filters (14; 24) erlaubt und bei der der zweite Einstellparameter (28) eine Einstellung des Verlaufs des Anstiegs der Übertragungsfunktion (H) des einstellbaren Filters (14; 24) von niedrigen Frequenzen (f) hin zu hohen Frequenzen (f) erlaubt.

2. Vorrichtung gemäß Anspruch 1 , bei der das einstellbare Filter (14; 24) zumindest drei Einstellparameter aufweist, und wobei der Filtereinsteller (16; 26) ausgebildet ist, um das einstellbare Filter (14; 24) bezüglich der zumindest drei Einstellparameter (27, 28) einzustellen.

3. Vorrichtung gemäß Anspruch 1 oder 2, bei der der Filtereinsteller (16; 26) ausgebildet ist, um das einstellbare Filter (14; 24) schrittweise so einzustellen (412), dass eine Anzahl von Maskenverletzungen (MF; MFR) schrittweise reduziert ist.

4. Vorrichtung gemäß einem der vorangehenden Ansprüche, bei der die Augenmaske (62) vier Referenzpunkte (64a-6d) aufweist, die jeweils einen zeitlichen Versatz (t_{T}-t₁, t₂-t_{T}) bezüglich eines Taktes (t_{T}) des empfangenen Datensignals (12) und einen Amplitudenwert (V₁, V₂) aufweisen, wobei eine Größe der Augenmaske (62) auf einem zeitlichen Abstand (Δt= t₂-t₁) und einem amplitudenmäßigen Abstand (ΔV= V₂-V₁) der Referenzpunkte (64a-d) basiert.

5. Vorrichtung gemäß Anspruch 4, bei der ein erster und ein zweiter Referenzpunkt (64a, 64b) einen ersten zeitlichen Versatz (t_{T}-t₁) in Hinblick auf den Takt (t_{T}) des empfangenen Datensignals (12), ein dritter und ein vierter Referenzpunkt (64c, 64d) einen zweiten zeitlichen Versatz (t₂-t_{T}) in Hinblick auf den Takt (t_{T}) des empfangenen Datensignals (12), der erste und der dritte Referenzpunkt (64a, 64c) einen ersten Amplitudenwert (V₂) und der zweite und der vierte Referenzpunkt (64b, 64d) einen zweiten Amplitudenwert (V₁) aufweisen.

6. Vorrichtung gemäß Anspruch 4 oder 5, bei der der Filtereinsteller (16; 26) ausgebildet ist, um die Anzahl von Maskenverletzungen (MF; MFR) für eine Vielzahl von aufeinanderfolgenden Symbolen des gefilterten Datensignals (18) zu bestimmen (412; 448; 476; 592), wobei der Filtereinsteller (16; 26) ausgebildet ist, um jedes der Vielzahl von Symbolen auf eine Maskenverletzung (MF; MFR) zu überprüfen.

7. Vorrichtung gemäß einem der vorangehenden Ansprüche, bei der der Filtereinsteller (16; 26) ausgebildet ist, um in einem ersten Iterationsdurchlauf eine erste Einstellung des einstellbaren Filters (14; 24) zu bestimmen, bei der das gefilterte Datensignal (18) bezüglich einer Augenmaske (62) mit einer ersten Größe eine erste Anzahl (MF20) von Maskenverletzungen (MF; MFR) aufweist, und in einem zweiten Iterationsdurchlauf, der auf den ersten Iterationsdurchlauf folgt, eine zweite Einstellung des einstellbaren Filters (14; 24) zu bestimmen, bei der das gefilterte Datensignal (18) eine zweite Anzahl (MFR_min) von Maskenverletzungen (MF; MFR) aufweist; und
bei der der Filtereinsteller (16; 26) ausgelegt ist, um entweder,
wenn die zweite Anzahl (MFR_min) kleiner ist als die erste Anzahl (MFR.0) von Maskenverletzungen (314; 414) und die zweite Anzahl (MFR_min) kleiner oder gleich einer vordefinierten Untergrenze (0) ist (316; 416), die zweite Einstellung des einstellbaren Filters (14; 24) als mögliche Lösung zu markieren (342; 442), eine Größe der Augenmaske (62) zu vergrößern (342; 442) und in einem dritten Iterationsdurchlauf eine dritte Filtereinstellung unter Verwendung der vergrößerten Ausgenmaske (62) zu bestimmen; oder
wenn die zweite Anzahl (MFR_min) kleiner ist als die erste Anzahl (MFR.0) von Maskenverletzungen (314; 414) und die zweite Anzahl (MFR_min) größer als die vordefinierten Untergrenze (0) ist (316; 416), in dem dritten Iterationsdurchlauf die dritte Filtereinstellung unter Verwendung der ersten Maskengröße zu bestimmen; oder
wenn die zweite Anzahl (MFR_min) von Maskenverletzungen (MF; MFR) größer oder gleich der ersten Anzahl (MFR.0) von Maskenverletzungen (314; 414) ist, das einstellbare Filter (14; 24) mit der ersten Einstellung einzustellen (347), wenn die erste Einstellung als mögliche Lösung der Filtereinstellung markiert ist (344), oder eine Größe der Augenmaske (62) zu verkleinern (346), wenn die erste Einstellung nicht als mögliche Lösung der Filtereinstellung markiert ist (344) und in dem dritten Iterationsdurchlauf die dritte Filtereinstellung unter Verwendung der verkleinerten Ausgenmaske (62) zu bestimmen.

8. Vorrichtung gemäß einem der vorangehenden Ansprüche, bei der Filtereinsteller (16; 26) ausgebildet ist, um ausgehend von einer ursprünglichen Filtereinstellung, der eine ursprüngliche Anzahl von Maskenverletzungen (MFR.0) zugeordnet ist, eine neue Filtereinstellung, der eine neue Anzahl von Maskenverletzungen (MFR_min) zugeordnet ist, mittels einer schrittweisen Anpassung (312; 412) von Einstellparametern (EP1, EP2; 27, 27) des einstellbaren Filters (14; 24) zu bestimmen.

9. Vorrichtung gemäß Anspruch 8, bei der der Filtereinsteller (16; 26) ausgebildet ist, um einen ersten und einen zweiten Einstellparameter (EP1, EP2; 27, 28) der Filtereinstellung schrittweise zu verändern (412), wenn ausgehend von der ursprünglichen Filtereinstellung die neue Filtereinstellung bestimmt wird.

10. Vorrichtung gemäß Anspruch 8 oder 9, bei der der Filtereinsteller (16; 26) ausgebildet ist, um ausgehend von der ursprüngliche Filtereinstellung mit ursprünglichen Einstellparametern (EP1.0, EP2.0) eine Mehrzahl von temporären Filtereinstellungen (a)-d), a')-d')) denen jeweils eine Anzahl von temporären Maskenverletzungen und temporäre Einstellparameter (EP1++, EP1--, EP2++, EP2--) zugeordnet sind, zu bestimmen, wobei der Filtereinsteller (16; 26)
ausgebildet ist, um einen minimalen Wert (MFR_min) der Maskenverletzungen für die Mehrzahl von temporären Filtereinstellungen (a)-d), a')-d')) zu bestimmen (412).

11. Vorrichtung gemäß Anspruch 10, bei der der Filtereinsteller (16; 26) ausgebildet ist, um den minimalen Wert (MFR_min) der temporären Maskenverletzungen mit einem Vergleichswert (MFR.0) zu vergleichen (314; 414) und um zu bestimmen (316; 416), ob der minimale Wert der temporären Maskenverletzungen (MFR_min) kleiner oder gleich einer vordefinierten Untergrenze (0) ist, wenn der minimale Wert der temporären Maskenverletzungen (MFR_min) kleiner ist als der Vergleichswert (0).

12. Vorrichtung gemäß Anspruch 10 oder 11, bei der Filtereinsteller (16; 26) einen Vergleichswertspeicher (32) aufweist und ausgebildet ist, um den minimalen Wert der temporären Maskenverletzungen (MFR_min) als Vergleichswert (MFR.0) für einen nächsten Iterationsdurchlauf in dem Vergleichswertspeicher (32) zu speichern (342; 442).

13. Vorrichtung gemäß einem der Ansprüche 10 bis 12, bei der der Filtereinsteller (16; 26) ausgebildet ist, um die neue Filtereinstellung unter Verwendung der temporären Einstellparameter (EP1++, EP1--, EP2++, EP2--) zu bestimmen, die dem minimalen Wert der temporären Maskenverletzungen (MFR_min) zugeordnet sind (422) und um die temporären Einstellparameter (EP1++, EP1--, EP2++, EP2--) als ursprüngliche Einstellparameter (EP1.0, EP2.0) für eine zukünftige neue Filtereinstellung, die in einem nächsten Iterationsdurchlauf bestimmt wird, zu liefern (418).

14. Verfahren (300; 400; 500) zur Entzerrung eines empfangenen Datensignals (12), mit folgenden Schritten:
Filtern des empfangenen Datensignal (12) mit einem einstellbaren Filter (14; 24), um ein gefiltertes Datensignal (18) basierend auf dem empfangenen Datensignal (12) zu erhalten;
Vergleichen (312; 412) des gefilterten Datensignals (18) mit einer Augenmaske (62);
Bestimmen (312; 412) einer Filtereinstellung (EP1, EP2; 27, 28) in Abhängigkeit einer Anzahl von Maskenverletzungen (MF; MFR), die das gefilterte Datensignal (18) bezüglich der Augenmaske (62) aufweist; und
Einstellen (347) des einstellbaren Filters (14; 24) basierend auf der bestimmten Einstellung;
wobei das einstellbare Filter (14; 24) einen ersten Einstellparameter (27) und einen zweiten Einstellparameter (28) aufweist und wobei das Einstellen (16; 26) bezüglich des ersten und des zweiten Einstellparameters (27, 28) ausgeführt wird;
wobei der erste Einstellparameter (27) eine Einstellung einer Hochfrequenzanhebung des einstellbaren Filters (14; 24) kontrolliert und wobei der zweite Einstellparameter (28) eine Einstellung des Verlaufs des Anstiegs der Übertragungsfunktion (H) des einstellbaren Filters (14; 24) von niedrigen Frequenzen (f) hin zu hohen Frequenzen (f) kontrolliert.

15. Computerprogramm mit einem Programmcode zur Durchführung des Verfahrens nach Anspruch 14, wenn das Programm auf einem Computer läuft.

## Claims

1. Device (10; 20) for de-emphasizing a received data signal (12), comprising:
an adjustable analog filter (14; 24) configured to filter the received data signal (12) and to provide a filtered data signal (18) on the basis of the received data signal (12); and
a filter adjuster (16; 26) configured to
compare the filtered data signal (18) to an eye mask (312; 412);
determine adjustment of the adjustable filter (14; 24) on the basis of a number of mask violations (MF; MFR) that is associated with the eye mask (62) and is comprised by the filtered data signal (18) with regard to the eye mask (62); and
adjust the adjustable filter (14; 24) on the basis of the adjustment determined (347; 592);
the adjustable filter (14; 24) comprising a first adjustment parameter (27) and a second adjustment parameter (28), and the filter adjuster (16; 26) being configured to adjust the adjustable filter (14; 24) with regard to the first and second adjustment parameters (27, 28); and
wherein the first adjustment parameter (27) enables adjustment of the highfrequency increase of the adjustable filter (14; 24), and wherein the second adjustment parameter (28) enables adjustment of the progress of the increase in the transmission function (H) of the adjustable filter (14; 24) from low frequencies (f) toward high frequencies (f).

2. Device as claimed in claim 1, wherein the adjustable filter (14; 24) comprises at least three adjustment parameters, and wherein the filter adjuster (16; 26) is configured to adjust the adjustable filter (14; 24) with regard to the at least three adjustment parameters (27, 28).

3. Device as claimed in claim 1 or 2, wherein the filter adjuster (16; 26) is configured to adjust the adjustable filter (14; 24) step by step (412) in such a manner that a number of mask violations (MF; MFR) is reduced step by step.

4. Device as claimed in any of the previous claims, wherein the eye mask (62) comprises four reference points (64a-6d), each of which has a time offset (t_{T}-t₁, t₂-t_{T}) with regard to a clock (t_{T}) of the received data signal (12) and an amplitude value (V₁, V₂), a quantity of the eye mask (62) being based on a time interval (Δt= t₂-t₁) and an amplitude-related distance (ΔV=V₂-V₁) of the reference points (64a-d).

5. Device as claimed in claim 4, wherein first and second reference points (64a, 64b) comprise a first time offset (t_{T}-T₁) with regard to the clock (t_{T}) of the received data signal (12), third and fourth reference points (64c, 64d) comprise a second time offset (t₂-t_{T}) with regard to the clock (t_{T}) of the received data signal (12), the first and third reference points (64a, 64c) comprise a first amplitude value (V₂), and the second and fourth reference points (64b, 64d) comprise a second amplitude value (V₁).

6. Device as claimed in claim 4 or 5, wherein the filter adjuster (16; 26) is configured to determine the number of mask violations (MF; MFR) for a multitude of successive symbols of the filtered data signal (18) (412; 448; 476; 592), the filter adjuster (16; 26) being configured to verify each of the multitude of symbols in terms of mask violation (MF; MFR).

7. Device as claimed in any of the previous claims, wherein the filter adjuster (16; 26) is configured to determine, in a first iteration cycle, a first adjustment of the adjustable filter (14; 24), wherein the filtered data signal (18) comprises a first number (MF20) of mask violations (MF; MFR) with regard to an eye mask (62) having a first size, and to determine, in a second iteration cycle following the first iteration cycle, a second adjustment of the adjustable filter (14; 24), wherein the filtered data signal (18) comprises a second number (MFR_min) of mask violations (MF; MFR); and
wherein the filter adjuster (16; 26) is configured either,
when the second number (MFR_min) is smaller than the first number (MFR.0) of mask violations (314; 414) and the second number (MFR_min) is smaller than or equal to a predefined lower limit (0) (316; 416), to mark the second adjustment of the adjustable filter (14; 24) as a possible solution (342; 442), to enlarge a size of the eye mask (62) (342; 442) and to determine, in a third iteration cycle, a third filter adjustment while using the enlarged eye mask (62); or
when the second number (MFR_min) is smaller than the first number (MFR.0) of mask violations (314; 414) and the second number (MFR_min) is larger than the predefined lower limit (0) (316; 416), to determine, in the third iteration cycle, the third filter adjustment values using the first mask size; or
when the second number (MRF_min) of mask violations (MR; MFR) is larger than or equal to the first number (MFR.0) of mask violations (314; 414), to adjust the adjustable filter (14; 24) with the first adjustment (347) when the first adjustment is marked as a possible solution of the filter adjustment (344), or to reduce a size of the eye mask (62) (346) when the first adjustment is not marked as a possible solution of the filter adjustment (344), and to determine, in the third iteration cycle, the third filter adjustment while using the eye mask (62) reduced in size.

8. Device as claimed in any of the previous claims, wherein the filter adjuster (16; 26) is configured to determine, on the basis of an original filter adjustment having an original number of mask violations (MFR.0) associated with it, a new filter adjustment having a new number of mask violations (MFR_min) associated with it, by means of a step-by-step adaptation (312; 412) of adjustment parameters (EP1, EP2; 27, 27) of the adjustable filter (14; 24).

9. Device as claimed in claim 8, wherein the filter adjuster (16; 26) is configured to change first and second adjustment parameters (EP1, EP2; 27, 28) of the filter adjustment step by step (412) when the new filter adjustment is determined on the basis of the original filter adjustment.

10. Device as claimed in claim 8 or 9, wherein the filter adjuster (16; 26) is configured to determine, on the basis of the original filter adjustment having original adjustment parameters (EP1.0, EP2.0), a plurality of temporary filter adjustments (a)-d), a')-d')), each of which has a number of temporary mask violations and temporary adjustment parameters (EP1++, EP1--, EP2++, EP2--) associated with them, the filter adjuster (16; 26) being configured to determine a minimum value (MFR_min) of the mask violations for the plurality of temporary filter adjustments (a)-d), a')-d')) (412).

11. Device as claimed in claim 10, wherein the filter adjuster (16; 26) is configured to compare the minimum value (MFR_min) of the temporary mask violations with a comparison value (MFR.0) (314; 414) and to determine (316; 416) whether the minimum value of the temporary mask violations (MFR_min) is smaller than or equal to a predefined lower limit (0) when the minimum value of the temporary mask violations (MRF_min) is smaller than the comparison value (0).

12. Device as claimed in claim 10 or 11, wherein the filter adjuster (16; 26) comprises a comparison-value storage (36) and is configured to store the minimum value of the temporary mask violations (MFR_min) as a comparison value (MFR.0) for a next iteration cycle in the comparison-value storage (32) (342; 442).

13. Device as claimed in any of claims 10 to 12, wherein the filter adjuster (16; 26) is configured to determine the new filter adjustment while using the temporary adjustment parameters (EP1++, EP1--, EP2++, EP2--) associated with the minimum value of the temporary mask violations (MFR_min) (422) and to provide the temporary adjustment parameters (EP1++, EP1--, EP2++, EP2--) as original adjustment parameters (EP1.0, EP2.0) for a future new filter adjustment which will be determined in a next iteration cycle (418).

14. Method (300; 400; 500) for de-emphasizing a received data signal (12), comprising:
filtering the received data signal (12) by means of an adjustable filter (14; 24) so as to obtain a filtered data signal (18) on the basis of the received data signal (12);
comparing (312; 412) the filtered data signal (18) with an eye mask (62);
determining (312; 412) a filter adjustment (EP1, EP2; 27, 28) as a function of a number of mask violations (MF; MFR) comprised by the filtered data signal (18) with regard to the eye mask (62); and
adjusting (347) the adjustable filter (14; 24) on the basis of the adjustment determined;
wherein the adjustable filter (14; 24) comprises a first adjustment parameter (27) and a second adjustment parameter (28) and wherein said adjustment (16; 26) is performed with regard to the first and second adjustment parameters (27, 28);
wherein the first adjustment parameter (27) controls adjustment of a highfrequency increase of the adjustable filter (14; 24), and wherein the second adjustment parameter (28) controls adjustment of the progress of the increase in the transmission function (H) of the adjustable filter (14; 24) from low frequencies (f) toward high frequencies (f).

15. Computer program having a program code for performing the method as claimed in claim 14, when the program runs on a computer.

## Revendications

1. Dispositif (10; 20) de correction d'un signal de données reçu (12), avec:
un filtre analogique réglable (14; 24) qui est conçu pour filtrer le signal de données reçu (12) et pour fournir un signal de données filtré (18) sur base du signal de données reçu (12); et
un moyen de réglage de filtre (16; 26) qui est conçu pour
comparer (312; 412) le signal de données filtré (18) avec un masque pour les yeux;
déterminer un réglage du filtre réglable (14; 24) sur base d'un nombre de violations de masque (MF; MFR) associé au masque pour les yeux (62) que présente le signal de données filtré (18) par rapport au masque pour les yeux (62); et
régler (347; 592) le filtre réglable (14; 24) sur base du réglage déterminé;
dans lequel le filtre réglable (14; 24) présente un premier paramètre de réglage (27) et un deuxième paramètre de réglage (28), et dans lequel le moyen de réglage de filtre (16; 26) est conçu pour régler le filtre réglable (14; 24) en ce qui concerne le premier et le deuxième paramètre de réglage (27, 28); et
dans lequel le premier paramètre de réglage (27) permet un réglage de l'augmentation de hautes fréquences du filtre réglable (14; 24) et dans lequel le deuxième paramètre de réglage (28) permet un réglage de l'évolution de l'augmentation de la fonction de transmission (H) du filtre réglable (14; 24) de basses fréquences (f) jusqu'à de hautes fréquences (f).

2. Dispositif selon la revendication 1, dans lequel le filtre réglable (14; 24) présente au moins trois paramètres de réglage, et dans lequel le moyen de réglage de filtre (16; 26) est conçu pour régler le filtre réglable (14; 24) en rapport avec les au moins trois paramètres de réglage (27, 28).

3. Dispositif selon la revendication 1 ou 2, dans lequel le moyen de réglage de filtre (16; 26) est conçu pour régler le filtre réglable (14; 24) pas à pas (412) de sorte qu'un nombre de violations de masque (MF; MFR) soit progressivement réduit.

4. Dispositif selon l'une des revendications précédentes, dans lequel le masque pour les yeux (62) présente quatre points de référence (64a à 6d) qui présentent, chacun, un décalage temporel (t_{T}-t₁, t₂-t_{T}) par rapport à une horloge (t_{T}) du signal de données reçu (12) et une valeur d'amplitude (V₁, V₂), la grandeur du masque pour les yeux (62) étant basée sur un intervalle de temps (Δt= t₂-t₁) et une distance d'amplitude (ΔV= V₂-V₁) des points de référence (64a à d).

5. Dispositif selon la revendication 4, dans lequel un premier et un deuxième point de référence (64a, 64b) présentent un premier décalage temporel (t_{T}-t₁) par rapport à l'horloge (t_{T}) du signal de données reçu (12), un troisième et un quatrième point de référence (64c, 64d), un deuxième décalage temporel (t₂-t_{T}) par rapport à l'horloge (t_{T}) du signal de données reçu (12), le premier et le troisième point de référence (64a, 64c) présentent une première valeur d'amplitude (V₂) et le deuxième et le quatrième point de référence (64b, 64d) présentent une deuxième valeur d'amplitude (V₁).

6. Dispositif selon la revendication 4 ou 5, dans lequel le moyen de réglage de filtre (16; 26) est conçu pour déterminer (412; 448; 476; 592) le nombre de violations de masque (MF; MFR) pour une pluralité de symboles successifs du signal de données filtré (18), dans lequel le moyen de réglage de filtre (16; 26) est conçu pour vérifier chacun de la pluralité de symboles quant à une violation de masque (MF; MFR).

7. Dispositif selon l'une des revendications précédentes, dans lequel le moyen de réglage de filtre (16; 26) est conçu pour déterminer, dans un premier passage d'itération, un premier réglage du filtre réglable (14; 24), dans lequel le signal de données filtré (18) présente, en ce qui concerne un masque pour les yeux (62) d'une première grandeur, un premier nombre (MF20) de violations de masque (MF; MFR), et pour déterminer, dans un deuxième passage d'itération qui suit le premier passage d'itération, un deuxième réglage du filtre réglable (14; 24), dans lequel le signal de données filtré (18) présente un deuxième nombre (MFR_min) de violations de masque (MF; MFR); et
dans lequel le moyen de réglage du filtre (16; 26) est conçu pour:
lorsque le deuxième nombre (MFR_min) est inférieur au premier nombre (MFR.0) de violations de masque (314; 414) et que le deuxième nombre (MFR_min) est inférieur ou égal (316; 416) à une limite inférieure prédéfinie (0), marquer (342; 442) le deuxième réglage du filtre réglable (14; 24) comme solution possible, agrandir (342; 442) une grandeur du masque pour les yeux (62) et déterminer, dans un troisième passage d'itération, un troisième réglage de filtre à l'aide du masque pour les yeux agrandi (62); ou
lorsque le deuxième nombre (MFR_min) est inférieur au premier nombre (MFR.0) de violations de masque (314; 414) et que le deuxième nombre (MFR_min) est supérieur (316; 416) à la limite inférieure prédéfinie (0), déterminer, dans le troisième passage d'itération, le troisième réglage de filtre à l'aide de la première grandeur de masque; ou
lorsque le deuxième nombre (MFR_min) de violations de masque (MF; MFR) est supérieur ou égal au premier nombre (MFR.0) de violations de masque (314; 414), régler le filtre réglable (14; 24) par le premier réglage (347) lorsque le premier réglage est marqué (344) comme solution possible pour le réglage du filtre, ou réduire (346) une grandeur du masque pour les yeux (62) lorsque le premier réglage n'est pas marqué (344) comme solution possible pour le réglage de filtre et déterminer, dans le troisième passage d'itération, le troisième réglage de filtre à l'aide du masque pour les yeux réduit (62).

8. Dispositif selon l'une des revendications précédentes, dans lequel le moyen de réglage de filtre (16; 26) est conçu pour déterminer, en partant d'un réglage de filtre original auquel est associé un nombre initial de violations de masque (MFR.0), un nouveau réglage de filtre auquel est associé un nouveau nombre de violations de masque (MFR_min) au moyen d'une adaptation pas à pas (312; 412) des paramètres de réglage (EP1, EP2; 27, 27) du filtre réglable (14; 24).

9. Dispositif selon la revendication 8, dans lequel le moyen de réglage de filtre (16; 26) est conçu pour modifier pas à pas (412) un premier et un deuxième paramètre de réglage (EP1, EP2; 27, 28) du réglage du filtre lorsque, en partant du réglage du filtre original, est déterminé le nouveau réglage de filtre.

10. Dispositif selon la revendication 8 ou 9, dans lequel le moyen de réglage de filtre (16; 26) est conçu pour déterminer, en partant du réglage de filtre original avec les paramètres de réglage originaux (EP1.0, EP2.0), une pluralité de réglages de filtres temporaires (a) à d), a') à d')) à chacun desquels sont associés une pluralité de violations de masque temporaires et de paramètres de réglage temporaires (EP1++, EP1--, EP2++, EP2--), dans lequel le moyen de réglage de filtre (16; 26) est conçu pour déterminer (412) une valeur minimale (MFR_min) des violations de masque pour la pluralité de réglages de filtre temporaires (a) à d), a') à d')).

11. Dispositif selon la revendication 10, dans lequel le moyen de réglage de filtre (16; 26) est conçu pour comparer (314; 414) la valeur minimale (MFR_min) des violations de masque temporaires avec une valeur de comparaison (MFR.0) et pour déterminer (316; 416) si la valeur minimale des violations de masque temporaires (MFR_min) est inférieure ou égale à une limite inférieure prédéfinie (0) lorsque la valeur minimale des violations de masque temporaires (MFR_min) est inférieure à la valeur de comparaison (0).

12. Dispositif selon la revendication 10 ou 11, dans lequel le moyen de réglage de filtre (16; 26) présente une mémoire de valeur de comparaison (32) et est conçu pour mémoriser (342; 442) la valeur minimale des violations de masque temporaires (MFR_min) comme valeur de comparaison (MFR.0) pour un passage d'itération suivant dans la mémoire de valeur de comparaison (32).

13. Dispositif selon l'une des revendications 10 à 12, dans lequel le moyen de réglage de filtre (16; 26) est conçu pour déterminer le nouveau réglage de filtre à l'aide des paramètres de réglage temporaires (EP1 ++, EP1--, EP2 ++, EP2--) qui sont associés (422) à la valeur minimale des violations de masque temporaires (MFR_min) et pour fournir (418) les paramètres de réglage temporaires (EP1++, EP1--, EP2++, EP2--) comme paramètres de réglage originaux (EP1.0, EP2.0) pour un nouveau réglage de filtre futur qui est déterminé dans un passage d'itération suivant.

14. Procédé (300; 400; 500) pour corriger un signal de données reçu (12), aux étapes suivantes consistant à:
filtrer le signal de données reçu (12) par un filtre ajustable (14; 24) pour obtenir un signal de données filtré (18) sur base du signal de données reçu (12);
comparer (312; 412) le signal de données filtré (18) avec un masque pour les yeux (62);
déterminer (312; 412) un réglage de filtre (EP1, EP2; 27,28) en fonction d'un nombre de violations de masque (MF; MFR) que présente le signal de données filtré (18) en rapport avec le masque pour les yeux (62); et
régler (347) le filtre réglable (14; 24) sur base du réglage déterminé;
dans lequel le filtre ajustable (14; 24) présente un premier paramètre de réglage (27) et un deuxième paramètre de réglage (28) et dans lequel le réglage (16; 26) est effectué en rapport avec le premier et le deuxième paramètre de réglage (27, 28);
dans lequel le premier paramètre de réglage (27) contrôle un réglage d'une augmentation de hautes fréquences du filtre réglable (14; 24), et dans lequel le deuxième paramètre de réglage (28) contrôle un réglage de l'évolution de l'augmentation de la fonction de transmission (H) du filtre réglable (14; 24) des basses fréquences (f) jusqu'à de hautes fréquences (f).

15. Programme d'ordinateur avec un code de programme pour réaliser le procédé selon la revendication 14 lorsque le programme est exécuté sur un ordinateur.
